# EUROPÄISCHE PATENTSCHRIFT

(11) **EP 2 904 026 B1**
(45) Veröffentlichungstag und Bekanntmachung des Hinweises auf die Patenterteilung: **15.08.2018**
(21) Anmeldenummer: 13750561.6
(22) Anmeldetag: 16.08.2013
(51) Int. Cl.: C08G 18/28, C08G 18/75, C08G 18/67, C08G 18/62, C08G 18/79, C09D 175/04, C09D 133/16, F03D 1/06, C09D 4/00, F01D 5/28

(54) **FLUORHALTIGE NICHTWÄSSRIGE BESCHICHTUNGSMITTELZUSAMMENSETZUNG, BESCHICHTUNGSVERFAHREN SOWIE DIE VERWENDUNG DER BESCHICHTUNGSMITTELZUSAMMENSETZUNG**
NONAQUEOUS COATING COMPOSITION CONTAINING FLUORINE, COATING PROCESS AND USE OF SAID COATING COMPOSITION
COMPOSITION DE REVÊTEMENT NONAQUEUSE CONTENANT DU FLUOR, SON UTILISATION, PROCÉDÉ DE LEUR APPLICATION

(30) Priorität: 04.10.2012 US 201261709548 P; 04.10.2012 EP 12187210
(43) Veröffentlichungstag der Anmeldung: 12.08.2015
(73) Patentinhaber: BASF Coatings GmbH, 48165 Münster (DE)
(72) Erfinder: KLEIN, Günter, 48165 Münster (DE); HOFFMANN, Peter, 48308 Senden (DE); FEIGL, Andreas, 48317 Drensteinfurt (DE); NIEDERMAIR, Fabian, 83308 Trostberg (DE); STEIDL, Norbert, 83361 Kienberg (DE); WALTHER, Burkhard, 84518 Garching (DE)
(74) Vertreter: BASF IP Association
(86) Internationale Anmeldenummer: PCT/EP2013/067151
(87) Internationale Veröffentlichungsnummer: WO 2014/053268

(56) Entgegenhaltungen:
- EP-B1- 0 856 020
- DE-A1-102008 010 464
- DATABASE WPI Week 200825 Thomson Scientific, London, GB; AN 2008-D28323 XP002714922, & CN 101 024 743 A (MARINE RES INST CHEM IND) 29. August 2007 (2007-08-29)

## Beschreibung

Die vorliegende Erfindung betrifft nichtwässrige Beschichtungsmittelzusammensetzungen enthaltend mindestens eine Polyhydroxylgruppen- und (Per)fluoralkylgruppen-haltige Poly(meth)acrylat-Komponente (A), mindestens eine Polyisocyanatgruppen-haltige Verbindung (B) und einen Katalysator (D).

Gegenstand der vorliegenden Erfindung sind außerdem Beschichtungsverfahren unter Verwendung dieser Beschichtungsmittelzusammensetzungen sowie die Verwendung der Beschichtungsmittelzusammensetzungen als Klarlack bzw. für die Beschichtung von Windenergieanlagen oder Luftfahrzeugen oder Teilen hiervon, insbesondere als Antiicing-Beschichtung.

Nichtwässrige Beschichtungsmittel auf der Basis fluorhaltiger Polymerer sind für viele sehr unterschiedliche Anwendungszwecke seit langem bekannt.

So sind beispielsweise in der EP-B-856 020 nichtwässrige Klarlacke auf der Basis fluorhaltiger Polyacrylat-Bindemittel und Polyisocyanatgruppenhaltiger Vernetzungsmittel beschrieben, die zu öl-, schmutz- und wasserabweisenden Beschichtungen gehärtet werden können und die für die Beschichtung von Fahrzeugen, wie U-Bahnen, Zügen, Bussen u.Ä., industriellen Anlagen, wie z.B. Tanks, Gebäuden und anderen Bauwerken eingesetzt werden können. Insbesondere dienen die Klarlacke zur Beschichtung Gebäuden, Bussen, Zügen und anderen Objekten, bei denen Graffiti ein Problem darstellt, da die resultierenden Beschichtungen leicht zu reinigen sind und außerdem eine gute Beständigkeit gegen Schmutz aufweisen. Zur Herstellung der fluorhaltigen Polyacrylat-Bindemittel werden ethylenisch ungesättigte Verbindungen mit Fluoralkylgruppen, wie beispielsweise Fluoroalkylethyl(meth)acrylate oder 2-(N-Ethylperfluorooctan-sulfoamido)ethylmethacrylat, eingesetzt. Diese fluorhaltigen Monomere müssen allerdings separat und getrennt von den übrigen Monomeren zudosiert werden, so dass die Herstellung der Bindemittel recht aufwändig ist.

Außerdem sind Angaben, wie möglichst dauerhaft stark hydrophobe Oberflächen erhalten werden können, die gleichzeitig eine sehr hohe mechanische und photochemische Beständigkeit aufweisen, wie sie beispielsweise für die Beschichtung von Rotorblättern für Windenergieanlagen gefordert werden, in dieser Schrift ebensowenig enthalten wie Angaben, wie eine möglichst schnelle Montagefestigkeit und gute Reparaturhaftung gewährleistet werden kann. Ebenso fehlen Angaben, wie diese Eigenschaften möglichst einfach und kostengünstig erreicht werden können.

Ferner sind aus der EP-B-856 022 ähnliche Beschichtungsmittel bekannt, die zusätzlich zu fluorhaltigen Polyacrylat-Bindemitteln als Vernetzer Polyisocyanate enthalten, bei denen 0,1 bis 33 Mol-% der Isocyanatgruppen mit Perfluoralkoholen umgesetzt worden sind. Bei der dort beschriebenen Herstellung der fluorierten Polyisocyanate sind neben monofluorierten Polyisocyanaten auch hohe Anteile an di- und tri-fluorierten Polyisocyanaten zu erwarten, die an die Lackoberfläche migrieren und so den optischen Gesamteindruck (das sogenannte "Appearance"), die Härte, die Chemikalienbeständigkeit und andere mechanisch-technologische Eigenschaften der resultierenden Beschichtung negativ beeinflussen können.

Fluorhaltige Klarlacke sind auch in der WO05/030892 beschrieben, wobei diese Klarlacke als Bindemittel fluorhaltige Polyacrylate enthalten, die zusätzlich noch Organosilanmonomere einpolymerisiert enthalten. Die fluorhaltigen Polyacrylate werden wiederum erhalten durch Einpolymerisieren von ethylenisch ungesättigten Verbindungen mit Fluoralkylgruppen, wie beispielsweise Fluoroalkylethyl(meth)acrylate oder 2-(N-Ethylperfluorooctan-sulfoamido)alkyl(meth)acrylat.

Aus der WO05/030891 sind fluorierte Klarlacke mit verbesserter Klarlack/Klarlack-Haftung bekannt, die neben einem fluorierten Silanpolymer auf Basis von einpolymerisierten ethylenisch ungesättigten Verbindungen mit Fluoralkylgruppen, wie beispielsweise Fluoroalkylethyl(meth)acrylaten oder 2-(N-Ethylperfluorooctan-sulfoamido)alkyl(meth)acrylaten, zur Haftungsverbesserung ein fluoriertes Polyurethanharz enthalten. Dieses ist erhältlich durch Umsetzung eines Polyisocyanates mit einem perfluorierten Monoalkohol und einem oligomeren und/oder polymeren Polyetherpolyol, wie ethoxiliertes/propoxiliertes Glykol, und weist keine freien Isocyanatgruppen mehr auf.

Die WO05/080465 beschreibt leicht zu reinigende, abriebfeste und alkalibeständige Beschichtungen, die durch Verwendung von Beschichtungsmitteln erhalten werden, welche neben einem härtbaren Bindemittelsystem und anorganischen Teilchen mindestens ein fluorhaltiges Polymer oder Oligomer mit mindestens einer funktionellen Gruppe enthalten, die mit einer funktionellen Gruppe des Bindemittelsystems reaktionsfähig ist. Als fluorhaltiges Polymer oder Oligomer werden beispielsweise fluorierte Polyether, fluorierte Epoxide, fluorierte Polyurethane und fluorhaltige Polymerisate eingesetzt, wobei die fluorhaltigen Polymerisate unter Verwendung von handelsüblichen Fluormonomeren, wie Tetrafluorethylen, Vinylidenflourid u.Ä., hergestellt werden.

Die WO07/115752 beschreibt zweikomponentige wässrige Hybridreaktivharzsysteme auf Polyurethanbasis mit einem Epoxid-/Amin-Härtungsmechanismus, die im Bau- und Industriebereich zur Herstellung von mechanisch hoch belastbaren und einfach zu reinigenden Beschichtungen eingesetzt werden. Ggf. können diese Beschichtungsmittel amino- und/oder hydroxy- und/oder mercapto-funktionelle fluormodifizierte Makromonomere oder Telechele enthalten.

Ferner beschreibt die WO05/007762 wässrige ggf. fluorierte Polyurethanhybrid-Dispersionen mit kovalent gebundenen fluorierten Seitenketten, die über die Polyurethanbasis und/oder über radikalisch polymerisierbare fluorhaltige Monomere eingeführt werden können. Unter Verwendung dieser Polyurethanhybrid-Dispersionen lassen sich, bedingt durch die hohe Vernetzungsdichte in Verbindung mit einer hohen Härte, schmutzabweisende Beschichtungen mit guten mechanischen Eigenschaften und einer guten Lösemittel- und Chemikalienbeständigkeit herstellen, die für sehr viele verschiedene Einsatzzwecke geeignet sind.

Auch aus der WO08/040428 sind fluormodifizierte Polyurethanbeschich - tungen insbesondere im Bau- und Industriebereich zur permanenten öl-, wasser- und schmutzabweisenden Beschichtung von mineralischen und nichtmineralischen Untergründen bekannt.

Weiterhin sind aus der EP-A-2 085 442 wässrige Beschichtungsmittel auf der Basis von Fluorsilan-Komponenten bekannt, die zur permanenten öl- und wasserabweisenden Oberflächenbehandlung von mineralischen und nichtmineralischen Untergründen für verschiedene Anwendungszwecke eingesetzt werden.

Aus der EP-B-587 667 sind Beschichtungsmittelzusammensetzungen auf der Basis von fluorhaltigen anorganischen Polykondensaten bekannt, die zur Beschichtung von Glas, Keramik, Metall, Kunststoffen und Papier, insbesondere zur Beschichtung von Außen- und Innenspiegeln sowie Windschutzscheiben von Kraftfahrzeugen, eingesetzt werden.

Die EP-A-1 844 863 beschreibt ebenfalls Beschichtungsmittel zur Herstellung stark flüssigkeitsabweisender Beschichtungen, also Beschichtungen, die mit einer Referenzflüssigkeit, wie insbesondere Wasser, einen möglichst großen Kontaktwinkel von 120° bis 180° ausbilden. Hierzu werden Beschichtungsmittel eingesetzt, die ein Polymer und ein keramisches Material bzw. Nanopartikel enthalten und die so zu Beschichtungen mit einer strukturierten Oberfläche führen. Angaben zur genaueren Zusammensetzung der Polymere sind jedoch nicht enthalten.

Für Oberflächenbeschichtungen wurden bereits Versuche mit kammförmigen Polymeren mit fluorierten Seitenketten durchgeführt. Diesbezüglich ist bekannt, dass zur Erzielung einer niedrigen Oberflächenenergie und somit guten schmutz- und wasserabweisenden Eigenschaften möglichst lange fluorierte Ketten und möglichst kurze Abstandshalter ("Spacer") zur Hauptkette, in Form von Kohlenwasserstoffgruppen, entscheidend sind. Längere Spacer führen hingegen zu deutlich schlechteren Ergebnissen ("Fluorinated comblike homopolymers: The effect of spacer lengths on surface properties", Saïdi, Salima; Guittard, Frederic; Guimon, Claude; Géribaldi, Serge; Journal of Polymer Science Part A: Polymer Chemistry, vol. 43, issue 17, pp. 3737-3747).

Weiterhin ist aus dem Journal of Donghua University (Natural Science), Vol. 35, No. 5, Oct. 2009, Seiten 547 - 553, die Herstellung einer fluorierter Polyacrylat-Emulsion durch Copolymerisation des Umsetzungsproduktes von Perfluoroctanol, Isophorondiisocyanat und Hydroxyethylacrylat mit Hydroxyethylacrylat und Octadecylacrylat sowie die Verwendung der erhaltenen fluorierten Polyacrylat-Emulsion zur Beschichtung von Baumwollfasern bekannt.

Außerdem beschreibt die chinesische Offenlegungsschrift CN101020731 A die Herstellung fluorierter Acrylatcopolymerer durch Umsetzung eines hydroxylgruppenhaltigen Acrylatcopolymers mit dem isocyanatgruppenhaltigen equimolaren Umsetzungsprodukt eines Diisocyanates mit einem Perfluoralkylalkohol. Diese lösemittelbasierten fluorierten Acrylatcopolymerisate werden zur wasser- und ölabweisenden Ausrüstung von Leder, Textilerzeugnissen u.Ä. eingesetzt.

Auch aus einer Vielzahl anderer Schriften sind hydrophobe Beschichtungsmittel zur Herstellung wasserabweisender Beschichtungen bekannt. So beschreibt beispielsweise die EP-B-1 210 396 hydrophobe Beschichtungszusammensetzungen zur Herstellung von Antiicing-Beschichtungen, welche durch chemische Anbindung von Partikeln an ein Gel, bevorzugt auf Silica-Basis, hergestellt werden und wobei die Hydrophobie der Oberflächen durch die Rauigkeit der Oberflächen physikalisch erhöht wird.

Die WO96/04123 beschreibt ebenfalls hydrophobe Beschichtungsmittel zur Herstellung selbstreinigender Oberflächen, bei denen eine eine künstliche Oberflächenstruktur aus Erhebungen und Vertiefungen erzeugt wird und die Erhebungen aus hydrophobierten Materialien bestehen. Hierzu wird beispielsweise Teflon verwendet.

Außerdem ist es beispielsweise aus der WO2011/147416 bekannt, die Oberfläche von Windenergieanlagen oder Teilen hiervon, insbesondere die Rotorblätter, mit einer stark hydrophoben Beschichtung zu versehen, um die Anhaftung von Eis, Wasser und Schmutz zu vermindern, da diese beispielsweise das Gewicht und die Aerodynamik der Rotorblätter negativ beeinflussen können und so die Effiziens der Windenergieanlage verringern. Als Beschichtungsmittel werden beispielsweise Teflon, Fluoropolyurethane, epoxyfluorierte Komponenten, silikonisierte Polyharnstoffe o.Ä. empfohlen. Nähere Angaben zur Zusammensetzung geeigneter Beschichtungsmittel sind auch in dieser Schrift nicht enthalten.

Ferner ist es auch aus der WO2011/020876 bekannt, die Oberfläche von Windenergieanlagen oder Teilen hiervon, insbesondere die Rotorblätter, mit einer stark hydrophoben Beschichtung auf der Basis von fluorierten Polyurethanen oder Polyurethanen in Abmischung mit Teflon zu versehen, wobei aber wiederum nähere Angaben zur Zusammensetzung geeigneter Beschichtungsmittel in dieser Schrift nicht enthalten sind.

Darüber hinaus ist es aus der EP-B-1 141 543 bekannt, die Rotorblätter von Windenergieanlagen mit einem flüssigkeitsabweisenden Lack zu beschichten, um so die Schallemission von Windenergieanlagen zu reduzieren. Als Beispiel für geeignete Lacke werden neben handelsüblichen Mikro-Silikonfarben auch für die Bootsbeschichtung entwickelte Polyurethanlacke genannt, wobei aber wiederum nähere Angaben zur Zusammensetzung geeigneter Beschichtungsmittel in dieser Schrift nicht enthalten sind.

### Aufgabe

Aufgabe der vorliegenden Erfindung war es daher, Beschichtungsmittelzusammensetzungen, vor allem für die Beschichtung von Windenergieanlagen oder Luftfahrzeugen oder Teilen hiervon, zur Verfügung zu stellen, die eine gute Haftung auf dem jeweiligen Untergrund oder einer auf dem Untergrund bereits vorhandenen Beschichtung sowie eine gute Überlackierbarkeit der resultierenden Beschichtung gewährleisten. Gleichzeitig sollten die Beschichtungsmittel zu Beschichtungen führen, die dauerhaft wasser- und schmutzabweisend sind und die vor Allem dauerhaft die Anhaftung von Eis, Wasser und Schmutz an Windenergieanlagen, Luftfahrzeugen oder Teilen hiervon, insbesondere an Rotorblättern von Windenergieanlagen, vermindern.

Ferner sollten die Beschichtungsmittelzusammensetzungen zu Beschichtungen führen, die gleichzeitig auch die hohen Anforderungen im Bereich der Beschichtung von Rotorblättern von Windenergieanlagen, insbesondere bezüglich einer sehr guten mechanischen und photochemischen Beständigkeit, erfüllen.

Weiterhin sollten die Beschichtungsmittelzusammensetzungen bei niedrigen Temperaturen von maximal 80°C eine gute und möglichst schnelle Aushärtung zeigen, also bereits nach Härtung von 30 min bei 60°C soweit ausgehärtet sein, dass erste Montagearbeiten oder Demaskierungen ohne Beschädigung der Beschichtung durchgeführt werden können. Gleichzeitig sollte aber auch eine genügend lange Verarbeitungszeit ("Topfzeit") der Beschichtungsmittelzusammensetzungen gewährleistet sein. Unter Topfzeit versteht man dabei die Zeitspanne, innerhalb derer die Beschichtungsmittelzusammensetzung den doppelten Wert seiner Anfangsviskosität erreicht hat.

Ferner sollten die resultierenden Beschichtungen einen guten optischen Gesamteindruck (sogenanntes "Appearance"), eine möglichst hohe Härte, eine gute Chemikalienbeständigkeit und gute andere im Bereich der Automobilreparaturlackierung und der Lackierung von Kunststoffsubstraten und/oder Nutzfahrzeugen üblicherweise geforderte mechanisch-technologische Eigenschaften aufweisen.

Schließlich sollten die Beschichtungsmittelzusammensetzungen möglichst einfach und kostengünstig herstellbar sein.

### Lösung der Aufgabe

Im Lichte der obengenannten Aufgabenstellung wurde eine nichtwässrige Beschichtungsmittelzusammensetzung gefunden, enthaltend
(A) 30 bis 80 Gew.-%, bevorzugt von 50 bis 70 Gew.-%, einer Polyhydroxylgruppen- und (Per)fluoralkylgruppen-haltigen Poly(meth)acrylat-Komponente (A),
(B) 20 bis 70 Gew.-%, bevorzugt von 30 bis 50 Gew.-%, einer oder mehrerer Polyisocyanatgruppen-haltigen Verbindungen (B) und
(D) einen oder mehrere Katalysatoren (D),
wobei die Gew.-%-Angaben der Komponenten (A) und (B) jeweils bezogen sind auf den Bindemittelgehalt der Komponenten (A) bzw. (B) und
wobei die Summe der Gewichtsanteile der Komponenten (A) plus (B) jeweils 100 Gew.-% beträgt,
dadurch gekennzeichnet, dass die Poly(meth)acrylat-Komponente (A) 0,05 bis 15,0 Gew.-%, jeweils bezogen auf die Menge aller zur Herstellung der Poly(meth)acrylat-Komponente (A) eingesetzten Verbindungen, eines oder mehrer fluorhaltiger Umsetzungsprodukte (U) aus
(i) einem oder mehreren Diisocyanaten (PI) mit unterschiedlich reaktiven Isocyanatgruppen,
(ii) einer oder mehreren (Per)fluoralkylmonoalkohol-Komponenten (FA) und
(iii) ggf. einer oder mehrerer Verbindungen (V) mit mindestens einer gegenüber Isocyanatgruppen reaktiven Gruppe (G1) und ggf. einer weiteren, von der Gruppe (G1) verschiedenen funktionellen Gruppe (G2)
enthält.

Gegenstand der vorliegenden Erfindung sind außerdem Beschichtungsverfahren unter Verwendung dieser Beschichtungsmittelzusammensetzungen sowie die Verwendung der Beschichtungsmittelzusammensetzungen als Klarlack bzw. für die Beschichtung von Windenergieanlagen oder Luftfahrzeugen oder Teilen hiervon, insbesondere als Antiicing-Beschichtung.

Es ist überraschend und war nicht vorhersehbar, dass die erfindungsgemäßen Beschichtungsmittelzusammensetzungen eine gute Haftung auf dem jeweiligen Untergrund oder einer auf dem Untergrund bereits vorhandenen Beschichtung sowie eine gute Überlackierbarkeit der resultierenden Beschichtung gewährleisten. Gleichzeitig führen die Beschichtungsmittel zu Beschichtungen, die dauerhaft wasser- und schmutzabweisend sind und die vor Allem dauerhaft die Anhaftung von Eis, Wasser und Schmutz an Windenergieanlagen, Luftfahrzeugen oder Teilen hiervon, insbesondere an Rotorblättern von Windenergieanlagen, vermindern.

Ferner führen die Beschichtungsmittelzusammensetzungen zu Beschichtungen, die gleichzeitig auch die hohen Anforderungen im Bereich der Beschichtung von Rotorblättern von Windenergieanlagen, insbesondere bezüglich einer sehr guten mechanischen und photochemischen Beständigkeit, erfüllen.

Weiterhin zeigen die Beschichtungsmittelzusammensetzungen bei niedrigen Temperaturen von maximal 80°C eine gute und möglichst schnelle Aushärtung, sind also bereits nach Härtung von 30 min bei 60°C soweit ausgehärtet, dass erste Montagearbeiten oder Demaskierungen ohne Beschädigung der Beschichtung durchgeführt werden können. Gleichzeitig ist aber auch eine genügend lange Verarbeitungszeit ("Topfzeit") der Beschichtungsmittelzusammensetzungen gewährleistet.

Ferner zeichnen sich die resultierenden Beschichtungen durch einen guten optischen Gesamteindruck (sogenanntes "Appearance"), eine möglichst hohe Härte, eine gute Chemikalienbeständigkeit und gute andere im Bereich der Automobilreparaturlackierung und der Lackierung von Kunststoffsubstraten und/oder Nutzfahrzeugen üblicherweise geforderte mechanisch-technologische Eigenschaften aus.

Schließlich sind die Beschichtungsmittelzusammensetzungen einfach und kostengünstig herstellbar.

### Ausführliche Beschreibung der Erfindung Die Poly(meth)acrylatkomponente (A)

Wie aus der nachfolgenden detaillierten Beschreibung hervorgeht, handelt es sich bei der Poly(meth)acrylatkomponente (A) insbesondere um gesättigte Poly(meth)acrylatcopolymerisate.

Es ist erfindungswesentlich, dass die Poly(meth)acrylat-Komponente (A) als Aufbaukomponente 0,05 bis 15,0 Gew.-%, bevorzugt 0,1 bis 10,0 Gew.-%, jeweils bezogen auf die Menge aller zur Herstellung der Poly(meth)acrylat-Komponente (A) eingesetzten Verbindungen, eines oder mehrer fluorhaltiger Umsetzungsprodukte (U) aus
(i) einem oder mehreren Diisocyanaten (PI) mit zwei unterschiedlich reaktiven Isocyanatgruppen,
(ii) einer oder mehreren (Per)fluoralkylmonoalkohol-Komponenten (FA) und
(iii) ggf. einer oder mehrerer Verbindungen (V) mit mindestens einer gegenüber Isocyanatgruppen reaktiven Gruppe (G1) und ggf. einer weiteren, von der Gruppe (G1) verschiedenen funktionellen Gruppe (G2)
enthält.

Die fluorhaltigen Umsetzungsprodukte (U) können dabei auf unterschiedliche Weise in die Poly(meth)acrylat-Komponente (A) eingeführt werden.

Beispielsweise ist es möglich, zunächst ein hydroxylgruppenhaltiges Poly-(meth)acrylatharz herzustellen und dann durch eine polymeranaloge Umsetzung einen Teil der Hydroxylgruppen der Poly(meth)acrylat-Komponente (A) mit den noch freien Isocyanatgruppen eines Fluor- und Isocyana-gruppenhaltigen Umsetzungsproduktes (U) umzusetzen.

Das Fluor- und Isocyanat-gruppenhaltige Umsetzungsprodukt (U) ist beispielsweise herstellbar aus
(i) einem oder mehreren Diisocyanaten (PI) mit zwei unterschiedlich reaktiven Isocyanatgruppen und
(ii) einer oder mehreren (Per)fluoralkylalkohol-Komponenten (FA).

Daneben ist es auch möglich, zunächst ein hydroxylgruppenhaltiges Poly-(meth)acrylatharz herzustellen, welches noch weitere funktionelle Gruppen, wie z.B. Carboxylgruppen, Anhydridgruppen, Epoxidgruppen o.Ä., aufweist, und dann diese weiteren funktionellen Gruppen mit einem fluorhaltigen Umsetzungsprodukt (U) umzusetzen, welches noch weitere funktionelle Gruppen aufweist, die mit den weiteren funktionellen Gruppen des Poly(meth)acrylatharzes reagieren.

Dieses Fluorgruppen-haltige Umsetzungsprodukt (U) ist dabei beispielsweise herstellbar aus
(i) einem oder mehreren Diisocyanaten (PI) mit zwei unterschiedlich reaktiven Isocyanatgruppen,
(ii) einer oder mehreren (Per)fluoralkylalkohol-Komponenten (FA) und
(iii) einer oder mehreren gesättigten Verbindungen (V) mit mindestens einer gegenüber Isocyanatgruppen reaktiven Gruppe (G1) und ggf. einer weiteren, von der Gruppe (G1) verschiedenen funktionellen Gruppe (G2).

Beispiele für geeignete Verbindungen (V) sind beispielsweise polymere Polyole mit mindestens 2 Hydroxylgruppen, wie z.B. Polyesterpolyole, Polyalkylenetherpolyole, Polycarbonatpolyole, Polyestercarbonatpolyole, Polyacetalpolyole, Polyurethanpolyole oder Polysiloxanpolyole. Bevorzugte polymere Polyole sind Polyester, Polyalkylenether, Polyestercarbonate und Polycarbonate.

Diese Umsetzung des bzw. der Diisocyanate(s) (PI) mit der bzw. den Verbindung(en) (V) und dem bzw. den (Per)fluoralkylalkohol(en) (FA) kann dabei gleichzeitig oder aber stufenweise erfolgen, indem z.B. zunächst die Isocyanatkomponente mit einer oder mehreren Verbindungen (V) umgesetzt wird und anschließend das erhaltene Zwischenprodukt mit der (Per)fluoralkylalkohol-Komponente (FA) umgesetzt wird.

Bevorzugt wird allerdings die (Per)fluoralkylgruppen-haltige Poly(meth)-acrylat-Komponente (A) nicht über eine polymeranaloge Reaktion, sondern durch Polymerisation entsprechender (Per)fluoralkylgruppen-haltiger ethylenisch ungesättigter Umsetzungsprodukte (U) hergestellt.

Bevorzugt enthält daher die Poly(meth)acrylat-Komponente (A) als fluorhaltige Aufbaukomponente das Umsetzungsprodukt (U) aus
(i) einem oder mehreren Diisocyanaten (PI) mit zwei unterschiedlich reaktiven Isocyanatgruppen,
(ii) einer oder mehreren (Per)fluoralkylmonoalkohol-Komponenten (FA) und
(iii) einer oder mehreren Verbindungen (V) mit einer gegenüber Isocyanatgruppen reaktiven Gruppe (G1) und mit einer ethylenisch ungesättigten Doppelbindung (G2).

Die Verwendung dieser speziellen ethylenisch ungesättigten fluorhaltigen Umsetzungsprodukte (U) als Aufbaukomponente gewährleistet eine gute Verträglichkeit mit den anderen zur Herstellung der Poly(meth)acrylat-Komponente (A) eingesetzten ethylenisch ungesättigten Verbindungen. Daher ist es im Allgemeinen bei den erfindungsgemäß eingesetzten perfluoralkylgruppenhaltigen ethylenisch ungesättigten Umsetzungsprodukten nicht erforderlich, diese - wie bei herkömmlichen, handelsüblichen fluorhaltigen Monomeren nötig - in einem separaten Zulauf zuzuführen, sondern sie können zusammen mit den übrigen Monomeren eingesetzt werden.

Zur Herstellung sowohl der o.g. Fluor- und Isocyanatgruppen-haltigen Umsetzungsprodukte (U) als auch zur Herstellung der bevorzugt eingesetzten ethylenisch ungesättigten fluorhaltigen Umsetzungsprodukte (U) ist es erfindungswesentlich, Diisocyanate (PI) mit zwei unterschiedlich reaktiven Isocyanatgruppen, wie beispielsweise Isophorondiisocyanat, einzusetzen. Hierdurch ist gewährleistet, selektiv monofluorierte Umsetzungsprodukte zu erhalten und entsprechend -falls überhaupt - nur einen äußerst geringen Anteil an bifluorierten Umsetzungsprodukten zu erhalten. Dies wiederum führt dazu, dass die fluorierten Umsetzungsprodukte (U) möglichst vollständig in die Poly(meth)acrylat-Komponente (A) eingebaut werden und entsprechend auch in der resultierenden gehärteten Beschichtung in das Netzwerk eingebaut sind.

Zur Herstellung sowohl der o.g. Fluorgruppen-haltigen Umsetzungsprodukte (U) als auch zur Herstellung der bevorzugt eingesetzten ethylenisch ungesättigten fluorhaltigen Umsetzungsprodukte (U) werden als (Per)fluoralkylmonoalkohol-Komponente (FA) bevorzugt Perfluoralkohole der allgemeinen Formel (I)

CF₃-(CF₂)ₓ-(CH₂)_{y}-O-A_{z}-H (I)

und/oder der allgemeinen Formel (II)

CR¹₃-(CR²₂)ₓ-(CH₂)_{y}-O-A_{z}-H (II)

eingesetzt,
worin R¹, R² = unabhängig voneinander H, F, CF₃, aber R¹ und R² nicht gleichzeitig H sein dürfen,
x = 1 - 20, y = 1 - 6, z = 0 - 100,
A = CR'R"-CR"'R''"-O oder (CR'R")ₐ-O oder CO-(CR'R")_{b}-O,
R', R", R'", R"" = unabhängig voneinander H, Alkyl, Cycloalkyl, Aryl, beliebiger organischer Rest mit 1 bis 25 C-Atomen,
a,b = 3 - 5,
ist, wobei es sich bei der Polyalkylenoxid-Struktureinheit A_{z} um Homopolymere, Copolymere oder Blockpolymere aus beliebigen Alkylenoxiden oder um Polyoxyalkylenglykole oder um Polylactone handelt.

Beispiele für als Perfluoralkylalkohole (FA) geeignete Verbindungen sind beispielsweise die in der WO2008/040428, Seite 33, Zeile 4 bis Seite 34, Zeile 3 beschriebenen (Per)fluoralkylalkohole sowie die in der EP-B-1 664 222 B1, Seite 9, Abschnitt [0054], bis Seite 10, Abschnitt [57] beschriebenen (Per)fluoralkylalkohole.

Insbesondere werden erfindungsgemäß Perfluoralkylalkohole (FA) der Formel (III)

F(CF₂CF₂)ₗ-(CH₂CH₂O)ₘ-H (III)

und/oder der Formel (IV)

CF₃-(CF₂)ₙ-(CH₂)_{b-}O-H (IV)

eingesetzt, wobei
l = 1 - 8, bevorzugt l = 1 bis 6, besonders bevorzugt l = 2 bis 3,
m = 1 bis 15, bevorzugt m = 5 bis 15,
n = 1 bis 12, bevorzugt n = 1 bis 6,
o = 1 bis 10, bevorzugt o = 1 bis 4, ist.

Beispiele für geeignete Perfluoralkohole sind 3,3,4,4,5,5,6,6,7,7,8,8,8-Tridecafluoroctan-1-ol, 3,3,4,4,5,5,6,6,7,7,8,8,9,9,10,10,10-heptadecafluor-decan-1-ol, 3,3,4,4,5,5,6,6,7,7,8,8,9,9,10,10,11,11,12,12,12-heneicosafluordodecan-1-ol, 3,3,4,4,5,5,6,6,7,7,8,8,9,9,10,10,11,11,12,12,13,13, 14,14,14-pentacosafluortetradecan-1-ol, 3,3,4,4,5,5,6,6,7,7,8,8,9,9,10,10, 11,11,12,12,13,13,14,14,15,15,16,16,16-nonacosafluorhexadecan-1-ol, 3,3,4,4,5,5,6,6,7,7,8,8-Dodecafluorheptan-1-ol, 3,3,4,4,5,5,6,6,7,7,8,8,9,9, 10,10-Hexadecafluornonan-1-ol, 3,3,4,4,5,5,6,6,7,7,8,8,9,9,10,10,11,11, 12,12-eicosafluorundecan-1-ol, 3,3,4,4,5,5,6,6,7,7,8,8,9,9,10,10,11,11, 12,12,13,13,14,14-tetracosafluortridecan-1-ol und 3,3,4,4,5,5,6,6,7,7,8,8, 9,9,10,10,11,11,12,12,13,13,14,14,15,15,16,16-octacosafluorpentadecan-1-ol.

Besonders bevorzugt werden sowohl zur Herstellung der o.g. Fluorgruppen-haltigen Umsetzungsprodukte (U) als auch zur Herstellung der bevorzugt eingesetzten ethylenisch ungesättigten fluorhaltigen Umsetzungsprodukte (U) als (Per)fluoralkylalkohol-Komponente (FA) Perfluoralkohole der allgemeinen Formel (V)

CF₃-(CF₂)ᵣ-(CH₂)ₚ-OH (V)

oder Mischungen verschiedener Fluoralkohole der Formel (V) eingesetzt, bei denen r = 1 bis 8, bevorzugt r = 1 bis 6, insbesondere r = 1 bis 4, und p = 1 bis 6, insbesondere p = 1 bis 2, ist.

Insbesondere werden Perfluoralkylethanole der Formel (V) mit p = 2, vorzugsweise 2(Perfluorhexyl)ethanol und 2(Perfluoroctyl)ethanol und Gemische verschiedener Perfluoralkylethanole der Formel (V), insbesondere eine Mischung aus 2(Perfluorhexyl)ethanol und 2(Perfluoroctyl)ethanol, ggf. zusammen mit anderen (Per)fluoralkylethanolen, eingesetzt. Vorzugsweise werden Perfluoralkylethanol-Gemische mit 30 bis 49,9 Gew.-% an 2(Perfluorhexyl)ethanol und 30 bis 49,9 Gew.-% an 2(Perfluoroctyl)-ethanol, wie die Handelsprodukte Fluowet® EA 612 und Fluowet® EA 812; 2(Perfluorhexyl)ethanol, wie das Handelsprodukt Daikin A-1620, oder 2(Perfluoroctyl)ethanol, wie das Handelsprodukt Daikin A-1820, der Firma Daikin Industries Ltd., Osaka, Japan eingesetzt. Ganz besonders bevorzugt wird 2(Perfluorhexyl)ethanol eingesetzt.

Als Verbindungen (V) mit einer gegenüber Isocyanatgruppen reaktiven Gruppe (G1) und mit einer ethylenisch ungesättigten Doppelbindung (G2) kommen beispielsweise Verbindungen mit einer ethylenisch ungesättigten Doppelbindung in Betracht, die zusätzlich noch eine Hydroxyl-, eine Amino-, eine Mercapto-, eine Carboxyl- oder eine Amidgruppe enthalten. Insbesondere kommen als Verbindung (V) Verbindungen mit einer acrylisch und/oder methacrylisch ungesättigten Doppelbindung in Betracht, die zusätzlich noch eine Hydroxyl-, eine Amino-, eine Mercapto-, eine Carboxyl- oder eine Amidgruppe enthalten. Besonders bevorzugt kommen als Komponente (V) Verbindungen mit einer acrylisch und/oder methacrylisch ungesättigten Doppelbindung in Betracht, die zusätzlich noch eine Hydroxylgruppe enthalten.

Beispiele für geeignete ethylenisch ungesättigte Verbindungen (V) sind ethylenisch ungesättigte Monocarbonsäuren und ethylenisch ungesättigte Dicarbonsäuren sowie deren Hydroxyalkylester, wie beispielsweise Acrylsäure, Methacrylsäure, Ethacrylsäure, Crotonsäure, Maleinsäure, Fumarsäure, Itaconsäure, Cironensäure und deren Hydroxyalkylester sowie aminogruppenhaltige Alkylester, wie insbesondere Butylaminoethylmethacrylat.

Besonders bevorzugt wird die Verbindung (V) ausgewählt aus der Gruppe Hydroxyalkylacrylat, Hydroxyalkylmethacrylat, Hydroxycycloalkylacrylat, Hydroxycycloalkylmethacrylat und deren Mischungen.

Beispiele für bevorzugt eingesetzte Hydroxyalkyl(meth)acrylate sind 2-Hydroxyethylacrylat, 2-Hydroxyethylmethacrylat, 2-Hydroxypropylacrylat, 2-Hydroxypropylmethacrylat, 3-Hydroxypropylacrylat, 3-Hydroxypropylmethacrylat, 3-Hydroxybutylacrylat, 3-Hydroxybutylmethacrylat, 4-Hydroxybutylacrylat, 4-Hydroxybutylmethacrylat u.Ä..

Als ethylenisch ungesättigte Verbindungen (V) mit einer gegenüber Isocyanatgruppen reaktiven Gruppe (G1) können insbesondere auch Umsetzungsprodukte von Lactonen mit Hydroxyalkylacrylaten, Hydroxyalkylmethacrylaten und deren Mischungen eingesetzt werden. Hierbei kann es sich um Homo- oder Mischpolymerisate von Lactonen, bevorzugt um endständige Hydroxylgruppen aufweisende Anlagerungsprodukte von Lactonen an geeignete difunktionelle Startermoleküle handeln. Beispiele für geeignete Lactone sind [ε]-Caprolacton, [β]-Propiolacton, [γ]-Butyrolacton und/oder Methyl-[ε]-caprolacton sowie deren Gemische. Anstelle der Polymerisate von Lactonen können auch insbesondere bevorzugt die entsprechenden chemisch äquivalenten Polykondensate der den Lactonen entsprechenden Hydroxycarbonsäuren eingesetzt werden.

Ferner können als ethylenisch ungesättigte Verbindungen (V) mit einer gegenüber Isocyanatgruppen reaktiven Gruppe (G1) auch mit einem polymeren Polyol modifizierte Hydroxyalkylacrylate, Hydroxyalkylmethacrylate und deren Mischungen eingesetzt werden, wie beispielsweise mit Polyesterpolyolen, Polyalkylenetherpolyolen, Polycarbonatpolyolen, Polyestercarbonatpolyolen, Polyacetalpolyolen, Polyurethanpolyolen oder Polysiloxanpolyolen modifizierte Hydroxyalkylacrylate, Hydroxyalkylmethacrylate und deren Mischungen. Bevorzugte polymere Polyole sind Polyester, Polyalkylenether, Polyestercarbonate und Polycarbonate.

Besonders bevorzugt enthält die Poly(meth)acrylat-Komponente (A) als fluorhaltige Aufbaukomponente das Umsetzungsprodukt (U) aus
(i) einem oder mehreren aliphatischen und/oder cycloaliphatischen Diisocyanaten (PI) mit zwei unterschiedlich reaktiven Isocyanatgruppen,
(ii) einer oder mehreren (Per)fluoralkylalkohol-Komponente (FA) der Formel (V)

   CF₃-(CF₂)ᵣ-(CH₂)ₚ-OH (V)

   bei denen r = 1 bis 8, bevorzugt r = 1 bis 6, besonders bevorzugt r = 1 bis 4 und p = 1 bis 6, bevorzugt p = 1 bis 2 ist, und
(iii) einer oder mehreren Verbindungen (V) mit einer Hydroxyl-Gruppe (G1) und mit einer acrylisch und/oder methacrylisch ungesättigten Doppelbindung (G2), bevorzugt ausgewählt aus der Gruppe Hydroxyalkyacrylat, Hydroxyalkylmethacrylat, mit Lacton umgesetztes Hydroxyalkylacrylat, mit Lacton umgesetztes Hydroxyalkylmethacrylat und deren Mischungen.

Ganz besonders bevorzugt enthält die Poly(meth)acrylat-Komponente (A) als fluorhaltige Aufbaukomponente das Umsetzungsprodukt (U) aus Isophorondiisocyanat, 2-(Perfluorhexyl)-ethanol und Hydroxyethylacrylat und/oder Hydroxyethylmethacrylat und/oder Hydroxyalkylcaprolactonacrylat und/oder Hydroxyalkylcaprolacton-methacrylat.

Die Mengenverhältnisse der Komponenten (PI), (FA) und (V) können dabei variieren. Bevorzugt sind allerdings für die polymeranaloge Einführung der Perfluoralkylgruppen Umsetzungsprodukte (U) aus
(i) 1 mol eines oder mehrerer Diisocyanate (PI) mit zwei unterschiedlich reaktiven Isocyanatgruppen und
(ii) 1 mol einer oder mehrerer (Per)fluoralkylmonoalkohol-Komponenten (FA).

Besonders bevorzugt werden Poly(meth)acrylat-Komponenten (A) eingesetzt, die als fluorhaltige Aufbaukomponente das Umsetzungsprodukt (U) aus
(i) 1 mol eines oder mehrerer Diisocyanate (PI) mit zwei unterschiedlich reaktiven Isocyanatgruppen,
(ii) 1 mol einer oder mehrerer (Per)fluoralkylmonoalkohol-Komponenten (FA) und
(iii) 1 mol einer oder mehrerer ethylenisch ungesättigter Verbindungen (V) mit mindestens einer gegenüber Isocyanatgruppen reaktiven Gruppe (G1)
enthalten.

Ferner ist es erfindungsgemäß bevorzugt, dass die Poly(meth)acrylat-Komponente (A) aus einem oder mehreren gesättigten Perfluoralkyl- und Polyhydroxyl-gruppenhaltigen Polyacrylaten oder einem oder mehreren gesättigten Perfluoralkyl- und Polyhydroxyl-gruppenhaltigen Polymethacrylaten oder einer Mischung aus einem oder mehreren gesättigten Perfluoralkyl- und Polyhydroxyl-gruppenhaltigen Polyacrylaten und einem oder mehreren gesättigten Perfluoralkyl- und Polyhydroxyl-gruppenhaltigen Polymethacrylaten besteht. Es können aber selbstverständlich als Komponente (A) auch Mischungen aus einem oder mehreren gesättigten Perfluoralkyl- und ggf. gesättigten Polyhydroxyl-gruppenhaltigen Poly(meth)acrylaten mit gesättigten fluorgruppenfreien, Polyhydroxyl-gruppenhaltigen Poly(meth)acrylaten eingesetzt werden. Hierbei ist nur darauf zu achten, dass die Mischung 0,05 bis 15 Gew.-%, bevorzugt 0,1 bis 10,0 Gew.-%, jeweils bezogen auf die Menge aller zur Herstellung der Poly(meth)acrylat-Komponente (A) eingesetzten Verbindungen, eines oder mehrer fluorhaltiger Umsetzungsprodukte (U) enthält.

Besonders bevorzugt werden als Komponente (A) Poly(meth)acrylate eingesetzt, die gesättigt sind und aufgebaut sind aus
(a1) 0,05 bis 15 Gew.-%, bevorzugt 0,1 bis 10 Gew.-% eines oder mehrer fluorhaltiger, ethylenisch ungesättigter Umsetzungsprodukte (U),
(a2) 10 bis 50 Gew.-%, bevorzugt 15 bis 45 Gew.-% eines oder mehrerer hydroxylgruppenhaltiger Monomerer,
(a3) 10 bis 89,95 Gew.-%, bevorzugt 30 bis 84,9 Gew.-% eines oder mehrerer Alkyl-und/oder Cycloalkylester von ethylenisch ungesättigten Carbonsäuren,
(a4) 0 bis 50 Gew.-%, bevorzugt 0 bis 30 Gew.-% eines oder mehrerer vinylaromatischer Verbindungen und
(a5) 0 bis 10 Gew.-%, bevorzugt 0 bis 5 Gew.-% weiterer ethylenisch ungesättigter Monomerer,
wobei die Summe der Gewichtsanteile der Monomeren (a1) bis (a5) jeweils 100 Gew.-% ergibt.

Als Monomer (a2) geeignet sind die bereits oben als Verbindung (V) aufgeführten Hydroxyalkyl(meth)acrylate und Hydroxycycloalkyl(meth)acrylate sowie Hydroxyalkyl- und Hydroxycycloalkyl-ester von ethylenisch ungesättigten Carbonsäuren, wie Fumar-, Croton- und Maleinsäure, und deren Mischungen.

Als Monomer (a3) geeignet sind insbesondere Alkylester von ethylenisch ungesättigten Carbonsäuren ohne aktiven Wasserstoff, besonders bevorzugt Alkylester ohne weitere funktionelle Gruppe, ganz besonders bevorzugt Alkylester von gesättigten Monoalkoholen mit ethylenisch ungesättigten Carbonsäuren. Beispiele für derartige Alkylester von ethylenisch ungesättigten Carbonsäuren (a3) sind Alkylester und Cycloalkylester der Acryl-, Methacryl-, Fumar-, Croton- und Maleinsäure, bevorzugt der Acryl- und/oder Methacrylsäure, wie vorzugsweise Methylacrylat, Methylmethacrylat, Ethylacrylat, Ethylmethacrylat, Propylacrylat, Propylmethacrylat, Isopropylacrylat, Isopropylmethacrylat, Butylacrylat, Butylmethacrylat, Isobutylacrylat, Isobutylmethacrylat, tert-Butylacrylat, tert-Butylmethacrylat, Amylacrylat, Amylmethacrylat, Hexylacrylat, Hexylmethacrylat, Ethylhexylacrylat, Ethylhexylmethacrylat, 3,3,5-Trimethylhexylacrylat, 3,3,5-Trimethylhexylmethacrylat, Stearylacrylat, Stearylmethacrylat, Laurylacrylat oder Laurylmethacrylat, Cycloalkylacrylate und/oder Cycloalkylmethacrylate, wie Cyclopentylacrylat, Cyclopentylmethacrylat, Isobornylacrylat, Isobornylmethacrylat, Cyclohexylacrylat und/oder Cyclohexylmethacrylat.

Als Monomer (a4) geeignet sind insbesondere vinylaromatische Verbindungen ohne aktiven Wasserstoff. Beispiele für geeignete vinylaromatische Verbindungen (a4) sind vinylaromatische Kohlenwasserstoffe wie Vinyltoluol, alpha-Methylstyrol oder insbesondere Styrol.

Als Monomer (a5) geeignet sind insbesondere ethylenisch ungesättigte Verbindungen mit mindestens zwei polymerisierbaren, ethylenisch ungesättigten Doppelbindungen ohne aktiven Wasserstoff. Beispiele für geeignete ethylenisch ungesättigte Monomere (a5) mit mindestens zwei polymerisierbaren, ethylenisch ungesättigten Doppelbindungen sind Diester von gesättigten Dialkoholen mit ethylenisch ungesättigten Carbonsäuren, insbesondere Diester von gesättigten Dialkoholen mit der Acryl-, Methacryl-, Fumar-, Croton- und Maleinsäure, bevorzugt der Acryl- und/oder Methacrylsäure, wie beispielsweise Hexandioldiacrylat, Hexandioldimethacrylat, Glykoldiacrylat, Glykoldimethacrylat, Butandioldiacrylat, Butandioldimethacrylat, Trimethylolpropantriacrylat und Trimethylolpropantrimethacrylat. Schließlich kann als Monomer (a5) auch ein Umsetzungsprodukt eines Polyisocyanats und eines ungesättigten Alkohols oder eines Amins verwendet werden. Als Beispiel hierfür sei das Reaktionsprodukt aus einem Mol Hexamethylendiisocyanat und zwei Mol Allylalkohol oder das Reaktionsprodukt aus Isophorondiisocyanat und Hydroxiethylacrylat genannt.

Als weitere, von den Monomeren (a1) bis (a4) verschiedene ethylenisch ungesättigte Verbindungen (a5) können auch siliciumfreie Monomere ohne aktiven Wasserstoff, wie z.B. Nitrile der Acryl- oder Methacrylsäure, Vinylester oder Vinylether, ethylenisch ungesättigten Carbonsäureamide, wie Acrylsäureamid, Methylacrylsäureamid, Itakonsäurediamid, α-Ethylacrylamid, Crotonsäureamid, Fumarsäureamid und Maleinsäurediamid, eingesetzt werden.

Die erfindungsgemäß ganz besonders bevorzugten Poly(meth)acrylat-polyole sind in der Regel Copolymerisate und weisen vorzugsweise massenmittlere Molekulargewichte Mw zwischen 1.000 und 20.000 Dalton, insbesondere zwischen 1.500 und 10.000 Dalton auf, jeweils gemessen mittels Gelpermeationschromatographie (GPC) gegen einen Polystyrolstandard.

Die Glasübergangstemperatur der Copolymerisate liegt in der Regel zwischen -100 und 100 °C, insbesondere zwischen -60 und ≤ 60 °C (gemessen mittels DSC-Messungen nach DIN-EN-ISO 11357-2).

Die Poly(meth)acrylatpolyole weisen bevorzugt eine OH-Zahl von 60 bis 300 mg KOH/g, insbesondere zwischen 70 und 200 mgKOH/g, auf.

Die Hydroxylzahl (OH-Zahl) gibt an, wie viel mg Kaliumhydroxid der Essigsäure-Menge äquivalent sind, die von 1 g Substanz bei der Acetylierung gebunden wird. Die Probe wird bei der Bestimmung mit Essigsäureanhydrid-Pyridin gekocht und die entstehende Säure mit Kaliumhydroxidlösung titriert (DIN 53240-2). Im Falle reiner Poly-(Meth)-Acrylate kann die OH-Zahl auch durch Berechnung auf Basis der eingesetzten OHfunktionellen Monomere ausreichend genau bestimmt werden.

Die Poly(meth)acrylatpolyole weisen bevorzugt eine Säurezahl zwischen 0 und 30 mg KOH/g auf. Die Säurezahl gibt hierbei die Anzahl der mg Kaliumhydroxid an, die zur Neutralisation von 1 g der jeweiligen Verbindung verbraucht wird (DIN EN ISO 2114).

### Polyhydroxylgruppenhaltige Verbindungen (C)

Die erfindungsgemäßen Beschichtungsmittelzusammensetzungen können ggf. außer der Polyhydroxylgruppen-haltigen Poly(meth)acrylat-Komponente (A) noch ein oder mehrere, von der Komponente (A) verschiedene, monomere gesättigte polyhydroxylgruppenhaltige Verbindungen und/oder gesättigte oligomere und/oder gesättigte polymere Polyesterpolyole, Polyurethanpolyole und Polysiloxanpolyole, insbesondere gesättigte Polyesterpolyole, (C) enthalten. Bevorzugt nehmen diese Verbindungen (C) einen Anteil von 0 bis 20 Gew.-%, besonders bevorzugt von 0 bis 10 Gew.-%, ganz besonders bevorzugt von 1 bis 5 Gew.-%, jeweils bezogen auf den Bindemittelanteil der Beschichtungsmittelzusammensetzung, ein.

Geeignete Polyesterpolyole sind beispielsweise in EP-A-0 994 117 und EP-A-1 273 640 beschrieben. Polyurethanpolyole werden vorzugsweise durch Umsetzung von Polyesterpolyol-Präpolymeren mit geeigneten Di- oder Polyisocyanaten hergestellt und sind beispielsweise in EP-A-1 273 640 beschrieben. Geeignete Polysiloxanpolyole sind beispielsweise in der WO-A-01/09260 beschrieben.

Als hydroxylgruppenhaltige Verbindung (C) können niedermolekulare Polyole eingesetzt werden. Als niedermolekulare Polyole werden beispielswiese Diole, wie bevorzugt Ethylenglykol, Neopentylglykol, 1,2,-Propandiol, 2,2,-Dimethyl-1,3-Propandiol,1,4-Butandiol, 1,3-Butandiol, 1,5,-Pentandiol, 2,2,4-Trimethyl-1,3-pentandiol, 1,6-Hexandiol, 1,4-Cyclohexandimethanol und 1,2-Cyclohexandimethanol, sowie Polyole, wie bevorzugt Trimethylolethan, Trimethylolpropan, Trimethylolhexan, 1,2,4-Butantriol, Pentaerythritol sowie Dipentaerythritol, eingesetzt. Bevorzugt werden solche niedermolekularen Polyole in untergeordneten Anteilen der Polyolkomponente (A) beigemischt.

### Die Polyisocyanatgruppenhaltige Komponente (B)

Die erfindungsgemäß eingesetzten isocyanatgruppenhaltigen Verbindungen (B) sind bevorzugt an sich bekannte substituierte oder unsubstituierte aromatische, aliphatische, cycloaliphatische und/oder heterocyclische Di- und/oder Polyisocyanate.

Beispiele für geeignete Diisocyanate sind: 2,4-Toluoldiisocyanat, 2,6-Toluoldiisocyanat, Diphenylmethan-4,4'-diisocyanat, Diphenylmethan-2,4'-diisocyanat, p-Phenylendiisocyanat, Biphenyldiisocyanate, 3,3'-Dimethyl-4,4'-diphenylendiisocyanat, Tetramethylen-1,4-diisocyanat, Hexamethylen-1,6-diisocyanat, 2,2,4-Trimethylhexane-1,6-diisocyanat, Isophorondiisocyanat, Ethylendiisocyanat, 1,12-Dodecandiisocyanat, Cyclobutan-1,3-diisocyanat, Cyclohexan-1,3-diisocyanat, Cyclohexan-1,4-diisocyanat, Methylcyclohexyldiisocyanate, Hexahydrotoluol-2,4-diisocyanat, Hexahydrotoluol-2,6-diisocyanat, Hexahydrophenylen-1,3-diisocyanat, Hexahydrophenylen-1,4-diisocyanat, Perhydrodiphenylmethan-2,4'-diisocyanat, 4,4'-Methylendicyclohexyldiisocyanat (z.B. Desmodur® W der Fa. Bayer AG), Tetramethylxylyldiisocyanate (z.B. TMXDI® der Fa. American Cyanamid) und Mischungen der vorgenannten Polyisocyanate.

Weiterhin bevorzugte Polyisocyanate sind die Isocyanurat- Trimere und/- oder Allophanat- Dimere und/oder Biuret- Dimere und/oder Uretdion-Dimere der vorgenannten Diisocyanate.

In einer weiteren Ausführungsform der Erfindung sind die Polyisocyanate Polyisocyanat-Präpolymerisate mit Urethan-Struktureinheiten, welche durch Umsetzung von Polyolen mit einem stöchiometrischen Überschuss an vorgenannten Polyisocyanaten erhalten werden. Solche Polyisocyanat-Präpolymere sind beispielsweise in US-A-4, 598,131 beschrieben.

Besonders bevorzugte Polyisocyanat-Komponenten (B) sind Hexamethylendiisocyanat, Isophorondiisocyanat und 4,4'-Methylendicyclohexyldiisocyanat und/oder deren Isocyanurat- Trimeres und/oder deren Allophanat-Dimeres und/oder deren Biuret- Dimeres und/oder deren Uretdion-Dimeres.

Die Polyisocyanat-Komponente (B) unterscheidet sich also von den zur Herstellung der Komponente (A) ggf. eingesetzten isocyanatgruppenhaltigen Umsetzungsprodukten (U) insbesondere durch einen höheren Isocyanatgruppengehalt, da die Komponente (B) im Mittel mindestens zwei Isocyanatgruppen pro Molekül aufweist, während die isocyanatgruppenhaltigen Umsetzungsprodukte (U) im Mittel weniger als zwei, bevorzugt eine, Isocyanatgruppe pro Molekül aufweisen.

### Katalysator (D)

Als Katalysator (D) können an sich bekannte Verbindungen eingesetzt werden. Beispiele sind Lewis-Säuren (Elektronenmangelverbindungen), wie beispielsweise Zinnnaphtenat, Zinnbenzoat, Zinnnoctoat, Zinnbutryrat, Dibutylzinndilaurat, Dibutylzinndiacetat, Dibutylzinnoxid, Bleioctoat, Aminaddukte der Phosphorsäure oder der Sulfonsäure (z.B. Nacure-Typen der Fa. King Industries). Bevorzugt werden in den Beschichtungsmitteln die Katalysatoren eingesetzt, die auch zur Herstellung der Umsetzungsprodukte (U) eingesetzt werden. Insbesondere kommen daher solche Katalysatoren zum Einsatz, die eine selektive Reaktion von nur einer Isocyanatgruppe bei der Herstellung der Umsetzungsprodukte gewährleisten, wie insbesondere zinnhaltige Katalysatoren.

Bevorzugt werden 0,001 bis 5 Gew.-%, bevorzugt 0,01 bis 2 Gew.-%, jeweils bezogen auf den Bindemittelgehalt der Summe der Komponenten (A) plus (B), eines oder mehrerer Katalysatoren (D) eingesetzt.

### Monomere Aromatische Carbonsäure (S)

Es ist ferner zur Verbesserung der Montagefestigkeit und der mechanischen Eigenschaften bevorzugt, dass die Beschichtungsmittelzusammensetzung mindestens eine monomere aromatische, ggf. substituierte Carbonsäure (S) enthält, deren Carboxylgruppe in Konjugation zu einem π-Elektronensystem steht. Dabei kann die Anzahl der Carboxylgruppen variieren, wobei die Carbonsäuren bevorzugt eine Carboxylgruppe aufweisen. Bevorzugt weisen die monomeren aromatischen, ggf. substituierten Carbonsäuren ein Molekulargewicht < 500 g/mol, besonders bevorzugt < 300 g/mol, auf. Bevorzugt werden monomere aromatische, ggf. substituierte Carbonsäuren eingesetzt, die einen pKs-Wert von 2 bis 5 aufweisen. Der pKs-Wert entspricht dem pH-Wert am Halbäquivalentspunkt, wobei das Lösungsmedium vorzugsweise Wasser ist. Sollte für eine Säure die Angabe eines pKs-Wertes in Wasser nicht möglich sein, so wird als Medium vorzugsweise DMSO gewählt oder aber ein anderes geeignetes Medium, in dem die Säure löslich ist.

Geeignet sind monomere aromatische Mono- und Polycarbonsäuren, die entsprechenden Alkyl- und Aryl-substituierten aromatischen Mono- und Polycarbonsäuren sowie die entsprechenden hydroxylgruppenhaltigen aromatischen Mono- und Polycarbonsäuren, wie beispielsweise Phthalsäure und Terephthalsäure, Alkyl- bzw. Aryl-substituierte Phthalsäure und Terephthalsäure, Benzoesäure und Alkyl- bzw. Aryl-substituierte Benzoesäure, aromatische Carbonsäuren mit weiteren funktionellen Gruppen wie Salicylsäure und Acetylsalicylsäure, Alkyl- bzw. Aryl-substituierte Salicylsäure oder Isomere davon, mehrkernige aromatische Carbonsäuren, wie die Isomeren der Naphthalincarbonsäure und deren Derivate.

Bevorzugt enthält die Beschichtungsmittelzusammensetzung als monomere aromatische Carbonsäure (S) Benzoesäure, tert.-Butylbenzoesäure, 3,4-Dihydroxybenzoesäure, Salicylsäure und/oder Acetylsalicylsäure, besonders bevorzugt Benzoesäure.

### Die Kombination der Komponenten (A), (B), ggf. (C), (D) und ggf. (S) sowie weitere Komponenten der Beschichtungsmittelzusammensetzungen

Handelt es sich um einkomponentige Beschichtungsmittelzusammensetzungen, so werden Polyisocyanatgruppen-haltige Verbindungen (B) gewählt, deren freie Isocyanatgruppen mit Blockierungsmitteln blockiert sind. Beispielsweise können die Isocyanatgruppen mit substituierten Pyrazolen, insbesondere mit Alkyl-substituierten Pyrazolen, wie 3-Methylpyrazol, 3,5-Dimethylpyrazol, 4-Nitro-3,5-dimethypyrazol, 4-Bromo-3,5-dimethylpyrazol u. Ä. blockiert werden. Besonders bevorzugt werden die Isocyanatgruppen der Komponente (B) nicht blockiert eingesetzt.

Bei den 2-komponentigen (2K) Beschichtungsmittelzusammensetzungen wird kurz vor der Applikation des Beschichtungsmittels eine Lackkomponente, enthaltend die Polyhydroxylgruppen-haltige Verbindung (A) sowie weitere nachfolgend beschriebene Komponenten, mit einer weiteren Lackkomponente, enthaltend die Polyisocyanatgruppen-haltige Verbindung (B) sowie gegebenenfalls weitere der nachfolgend beschriebenen Komponenten in an sich bekannter Weise vermischt, wobei in der Regel die Lackkomponente, die die Verbindung (A) enthält, den Katalysator (D) sowie einen Teil des Lösemittels enthält.

Die Polyhydroxykomponente (A) kann in einem geeigneten Lösemittel vorliegen. Geeignete Lösemittel (L) sind solche, die eine ausreichende Löslichkeit der Polyhydroxykomponente ermöglichen und die im Beschichtungsmittel chemisch inert gegenüber den Verbindungen (A), (B), (D), (S) und ggf. (C) sind und die auch bei der Härtung des Beschichtungsmittels nicht mit (A), ggf. (C), (B), (D) und (S) reagieren. Insbesondere handelt es sich hierbei um aprotische Lösemittel. Beispiele für solche aprotischen Lösemittel (L) sind weiter unten genannt.

Die erfindungsgemäßen Beschichtungsmittelzusammensetzungen härten über eine Reaktion der Hydroxylgruppen der Komponenten (A) und ggf. (C) mit den Isocyanatgruppen der Komponente (D).

Die Gewichtsanteile des Polyols (A) und ggf. (C) und des Polyisocyanates (B) werden vorzugsweise solchermaßen gewählt, dass das molare Äquivalentverhältnis der Hydroxylgruppen der Polyhydroxylgruppen-haltigen Verbindung (A) plus ggf. (C) zu den Isocyanatgruppen der Komponente (B) zwischen 1:0,9 und 1:1,5, bevorzugt zwischen 1:0,9 und 1:1,1 besonders bevorzugt zwischen 1:0,95 und 1:1,05, liegt.

Erfindungsgemäß werden Beschichtungsmittelzusammensetzungen eingesetzt, die von 30 bis 80 Gew.-%, bevorzugt von 50 bis 70 Gew.-%, jeweils bezogen auf den Bindemittelgehalt der Komponente (A), der Polyhydroxylgruppen- und (Per)fluoralkylgruppen-haltigen Poly(meth)acrylat-Komponente (A) und von 20 bis 70 Gew.-%, bevorzugt von 30 bis 50 Gew.-%, jeweils bezogen auf den Bindemittelgehalt der Komponente (B), der Polyisocyanatgruppen-haltigen Verbindung(en) (B) enthalten, wobei stets die Summe der Gewichtsanteile der Komponenten (A) plus (B) 100 Gew.-% beträgt.

Außerdem enthalten die erfindungsgemäßen Beschichtungsmittelzusammensetzungen bevorzugt 0,001 bis 5 Gew.-%, besonders bevorzugt von 0,01 bis 2 Gew.-%, jeweils bezogen auf den Bindemittelgehalt der Summe der Komponenten (A) plus (B), eines oder mehrerer Katalysatoren (D).

Bevorzugt enthalten die erfindungsgemäßen Beschichtungsmittelzusammensetzungen außerdem 0,2 bis 15,0 Gew.-%, bevorzugt 0,5 bis 8,0 Gew.-% und besonders bevorzugt 0,5 bis 5,0 Gew.-%, mindestens einer aromatischen Carbonsäure (S), wobei die Gew.-%-Angaben jeweils bezogen sind auf den Bindemittelgehalt der Summe der Komponenten (A) plus (B).

Unter Bindemittelanteil ist jeweils der in Tetrahydrofuran (THF) lösliche Anteil der Beschichtungsmittelzusammensetzung vor der Vernetzung zu verstehen. Dazu wird eine kleine Probe (P) gewogen, in der 50- bis 100-fachen Menge THF gelöst, unlösliche Bestandteile werden abfiltriert, das THF abgedampft und daran anschließend der Festkörper der zuvor in THF gelösten Bestandteile bestimmt, indem für 60 Minuten bei 130°C getrocknet wird, im Exsikkator abgekühlt wird und dann erneut gewogen wird. Der Rückstand entspricht dem Bindemittelgehalt der Probe (P).

Die Summe der Gewichtsanteile der Komponenten (A) plus (B) (wobei aber jeweils nur der Bindemittelanteil, aber nicht der evt. vorhandene Lösemittelanteil berücksichtigt wird) ergibt also jeweils 100 Gew.-% und die Mengen der Komponenten (D) bzw. (S) sind auf diese Summe der Gewichtsanteile der Komponenten (A) plus (B) bezogen.

Die erfindungsgemäßen Beschichtungsmittelzusammensetzungen sind bevorzugt nichtwässrige Beschichtungsmittel und können Lösemittel enthalten oder als lösemittelfreie Systeme formuliert sein.

Als Lösemittel (L) für die erfindungsgemäßen Beschichtungsmittelzusammensetzungen sind insbesondere solche geeignet, die im Beschichtungsmittel chemisch inert gegenüber den Verbindungen (A) und (B) sind und die auch bei der Härtung des Beschichtungsmittels nicht mit (A) und (B) reagieren. Beispiele für solche Lösemittel (L) sind aliphatische und/oder aromatische Kohlenwasserstoffe wie Toluol, Xylol, Solventnaphta, Solvesso 100 oder Hydrosol® (Fa. ARAL), Ketone, wie Aceton, Methylethylketon oder Methylamylketon, Ester, wie Ethylacetat, Butylacetat, Pentylacetat oder Ethylethoxypropionat, Ether oder Mischungen aus den vorgenannten Lösemitteln. Bevorzugt weisen die aprotischen Lösemittel oder Lösemittelgemische einen Wassergehalt von maximal 1 Gew.-%, besonders bevorzugt maximal 0,5 Gew.-%, bezogen auf das Lösemittel auf.

Das bzw. die Lösemittel (L) werden in den erfindungsgemäßen Beschichtungsmittelzusammensetzungen bevorzugt in einer solchen Menge eingesetzt, dass der Festkörpergehalt der Beschichtungsmittelzusammensetzung mindestens 50 Gew.-%, besonders bevorzugt mindestens 60 Gew.-% beträgt.

Weiterhin können die erfindungsgemäßen Beschichtungsmittelzusammensetzungen 0 bis 30 Gew.-%, bevorzugt 0 bis 15 Gew.-%, jeweils bezogen auf den Bindemittelgehalt der Beschichtungsmittelzusammensetzung, eines oder mehrerer Aminoplastharze und/oder eines oder mehrerer Tris(Alkoxycarbonylamino)Triazine (E) enthalten.

Beispiele für geeignete Tris(Alkoxycarbonylamino)Triazine sind in der US-A-4 939 213, der US-A- 5 084 541 und der EP-A-0 624 577 genannt.

Beispiele für geeignete Aminoplastharze (E) sind alle im Bereich der Lackindustrie üblicherweise eingesetzten Aminoplastharze, wobei über die Reativität des Aminoplastharzes die Eigenschaften der resultierenden Beschichtungsmittel gesteuert werden können. Es handelt sich um Kondensationsprodukte aus Aldehyden, insbesondere Formaldehyd, und beispielsweise Harnstoff, Melamin, Guanamin und Benzoguanamin. Die Aminoplastharze enthalten Alkohol-, vorzugsweise Methylolgruppen, die in der Regel teilweise oder bevorzugt vollständig mit Alkoholen verethert sind. Es werden insbesondere mit niedrigen Alkoholen veretherte Aminoplastharze eingesetzt. Bevorzugt werden mit Methanol und/oder Ethanol und/oder Butanol veretherte Aminoplastharze, beispielsweise in dem Handel unter den Bezeichnungen Cymel®, Resimene®, Maprenal® und Luwipal® erhältlichen Produkte, eingesetzt.

Die Aminoplastharze (E) sind altbekannte Verbindungen und werden beispielsweise im Detail in der amerikanischen Patentanmeldung US 2005/0182189 A1, Seite 1, Absatz [0014], bis Seite 4, Absatz [0028], beschrieben.

Darüber hinaus kann die erfindungsgemäße Bindemittelmischung bzw. die erfindungsgemäße Beschichtungsmittelzusammensetzung mindestens ein übliches und bekanntes Lackadditiv (F) in wirksamen Mengen, d.h. in Mengen vorzugsweise bis zu 20 Gew.-%, besonders bevorzugt bis zu 15 Gew.-% und insbesondere bis zu 10 Gew.-%, jeweils bezogen auf den Bindemittelgehalt der Beschichtungsmittelzusammensetzung, enthalten.

Beispiele geeigneter Lackadditive (F) sind:
- insbesondere UV-Absorber;
- insbesondere Lichtschutzmittel wie HALS-Verbindungen, Benztriazole oder Oxalanilide;
- Radikalfänger;
- Slipadditive;
- Polymerisationsinhibitoren;
- Entschäumer;
- von den Komponenten (A) und (C) verschiedene Reaktivverdünner, insbesondere Reaktivverdünner, die erst durch Reaktion mit weiteren Bestandteilen bzw. Wasser reaktiv werden, wie beispielsweise Incozol® oder Asparaginsäureester
- von den Komponenten (A) und (C) verschiedene Netzmittel wie Siloxane, fluorhaltige Verbindungen, Carbonsäurehalbester, Phosphorsäureester, Polyacrylsäuren und deren Copolymere oder Polyurethane;
- Haftvermittler;
- Verlaufsmittel;
- filmbildende Hilfsmittel wie Cellulose-Derivate;
- Füllstoffe wie beispielsweise Nanopartikel auf der Basis von Siliziumdioxid, Aluminiumoxid oder Zirkoniumoxid; ergänzend wird noch auf das Römpp Lexikon »Lacke und Druckfarben« Georg Thieme Verlag, Stuttgart, 1998, Seiten 250 bis 252, verwiesen;
- von den Komponenten (A) und (C) verschiedene rheologiesteuernde Additive, wie die aus den Patentschriften WO 94/22968, EP-A-0 276 501, EP-A-0 249 201 oder WO 97/12945 bekannten Additive; vernetzte polymere Mikroteilchen, wie sie beispielsweise in der EP-A-0 008 127 offenbart sind; anorganische Schichtsilikate wie Aluminium-Magnesium-Silikate, Natrium-Magnesium- und Natrium-Magnesium-Fluor-Lithium-Schichtsilikate des Montmorillonit-Typs; Kieselsäuren wie Aerosile®; oder synthetische Polymere mit ionischen und/oder assoziativ wirkenden Gruppen wie Poly(meth)acrylamid, Poly(meth)acrylsäure, Polyvinylpyrrolidon, Styrol-Maleinsäureanhydrid- oder Ethylen-Maleinsäure-anhydrid-Copolymere und ihre Derivate oder hydrophob modifizierte ethoxylierte Urethane oder Polyacrylate;
- Flammschutzmittel.

Besonders bevorzugt sind Beschichtungsmittelzusammensetzungen enthaltend
50 bis 70 Gew.-%, bezogen auf den Bindemittelgehalt der Komponente (A), mindestens eines Polyhydroxylgruppen-haltigen Polyacrylates (A) und/oder mindestens eines Polyhydroxylgruppen-haltigen Polymethacrylates (A),
30 bis 50 Gew.-%, bezogen auf den Bindemittelgehalt der Komponente (B), der Polyisocyanatgruppen-haltigen Verbindung (B),
0 bis 10 Gew.-%, bezogen auf den Bindemittelgehalt der Beschichtungsmittelzusammensetzung, der hydroxylgruppen-haltigen Komponente (C), 0,5 bis 8,0 Gew.-%, bezogen auf den Bindemittelgehalt der Summe der Komponenten (A) plus (B), mindestens einer aromatischen Carbonsäure (S),
0 bis 15 Gew.-%, bezogen auf den Bindemittelgehalt der Beschichtungsmittelzusammensetzung, eines oder mehrerer Aminoplastharze und/oder eines oder mehrerer Tris(Alkoxycarbonylamino)Triazine (E),
0 bis 10 Gew.-%, bezogen auf den Bindemittelgehalt der Beschichtungsmittelzusammensetzung, mindestens eines üblichen und bekannten Lackadditivs (F)
und
0,01 bis 2 Gew.-%, mindestens eines Katalysators (D), bezogen auf den Bindemittelgehalt der Summe der Komponenten (A) plus (B),
wobei die Summe der Gewichtsanteile der Komponenten (A) plus (B) jeweils 100 Gew.-% beträgt und wobei die Poly(meth)acrylat-Komponente (A) 0,1 bis 10,0 Gew.-%, jeweils bezogen auf die Menge aller zur Herstellung der Poly(meth)acrylat-Komponente (A) eingesetzten Verbindungen, eines oder mehrer fluorhaltiger Umsetzungsprodukte (U) aus
(i) einem oder mehreren aliphatischen und/oder cycloaliphatischen Diisocyanaten (PI) mit zwei unterschiedlich reaktiven Isocyanatgruppen,
(ii) einer oder mehreren (Per)fluoralkylalkohol-Komponente (FA) CF₃-(CF₂)ₙ-CH₂-CH₂O-H worin n = 1 bis 6 ist, sowie
(iii) einer oder mehreren Verbindungen (V) mit einer Hydroxyl-Gruppe (G1) und mit einer acrylisch und/oder methacrylisch ungesättigten Doppelbindung (G2), bevorzugt ausgewählt aus der Gruppe Hydroxyalkyl(meth)acrylat, mit Lactonen umgesetztes Hydroxyalkyl(meth)-acrylat und deren Mischungen,
enthält.

In einer weiteren Ausführungsform der Erfindung kann die erfindungsgemäße Bindemittelmischung bzw. die erfindungsgemäße Beschichtungsmittelzusammensetzung noch weitere Pigmente und/oder Füllstoffe enthalten und zur Herstellung pigmentierter Topcoats bzw. pigmentierter Undercoats oder Füller, insbesondere pigmentierter Topcoats, dienen. Die dafür eingesetzten Pigmente und/oder Füllstoffe sind dem Fachmann bekannt. Die Pigmente werden üblicherweise in einer solchen Menge eingesetzt, dass das Pigment-zu-Bindemittel-Verhältnis zwischen 0,05 : 1 und 1,5 : 1 liegt, jeweils bezogen auf den Bindemittelgehalt der Beschichtungsmittelzusammensetzung.

Da die aus den erfindungsgemäßen Beschichtungsmitteln hergestellten erfindungsgemäßen Beschichtungen auch auf bereits ausgehärteten Elektrotauchlackierungen, Füllerlackierungen, Basislackierungen oder üblichen und bekannten Klarlackierungen hervorragend haften, eignen sie sich neben dem Einsatz in der Automobilserien(OEM)lackierung ausgezeichnet für die Autoreparaturlackierung und/oder für die Beschichtung von Automobilanbauteilen und/oder die Beschichtung von Nutzfahrzeugen.

Die Applikation der erfindungsgemäßen Beschichtungsmittelzusammensetzungen kann durch alle üblichen Applikationsmethoden, wie z.B. Spritzen, Rakeln, Streichen, Gießen, Tauchen, Tränken, Träufeln oder Walzen erfolgen. Dabei kann das zu beschichtende Substrat als solches ruhen, wobei die Applikationseinrichtung oder -anlage bewegt wird. Indes kann auch das zu beschichtende Substrat, insbesondere ein Coil, bewegt werden, wobei die Applikationsanlage relativ zum Substrat ruht oder in geeigneter Weise bewegt wird.

Vorzugsweise werden Spritzapplikationsmethoden angewandt, wie zum Beispiel Druckluftspritzen, Airless-Spritzen, Hochrotation, elektrostatischer Sprühauftrag (ESTA), gegebenenfalls verbunden mit Heißspritzapplikation wie zum Beispiel Hot-Air-Heißspritzen.

Die Aushärtung der applizierten erfindungsgemäßen Beschichtungsmittel kann nach einer gewissen Ruhezeit erfolgen. Die Ruhezeit dient beispielsweise zum Verlauf und zur Entgasung der Lackschichten oder zum Verdunsten von flüchtigen Bestandteilen wie Lösemittel. Die Ruhezeit kann durch die Anwendung erhöhter Temperaturen und/oder durch eine reduzierte Luftfeuchte unterstützt und/oder verkürzt werden, sofern hierbei keine Schädigungen oder Veränderungen der Lackschichten eintreten, etwa eine vorzeitige vollständige Vernetzung.

Die thermische Härtung der Beschichtungsmittel weist keine methodischen Besonderheiten auf, sondern erfolgt nach den üblichen und bekannten Methoden wie Erhitzen in einem Umluftofen oder Bestrahlen mit IR-Lampen. Hierbei kann die thermische Härtung auch stufenweise erfolgen. Eine weitere bevorzugte Härtungsmethode ist die Härtung mit nahem Infrarot (NIR-Strahlung).

Vorteilhafterweise erfolgt die thermische Härtung bei einer Temperatur von 20 bis 200°C während einer Zeit von 1 min bis zu 10 h, wobei bei niedrigen Temperaturen auch längere Härtezeiten zur Anwendung kommen können. Für die Automobilreparaturlackierung und für die Lackierung von Kunststoffteilen sowie die Lackierung von Nutzfahrzeugen werden dabei üblicherweise niedrigere Temperaturen angewandt, die bevorzugt zwischen 20 und 80°C, insbesondere zwischen 20 und 60°C liegen.

Die erfindungsgemäßen Beschichtungsmittelzusammensetzungen eignen sich hervorragend als dekorative, schützende und/oder effektgebende, Beschichtungen und Lackierungen von Karosserien von Fortbewegungsmitteln (insbesondere Kraftfahrzeuge, wie Fahrräder, Motorräder, Busse, LKW oder PKW) oder von Teilen hiervon; insbesondere zur Beschichtung von Kunststoff-Anbauteilen für Pkw-Karosserien, wie z. B. für die Herstellung von Dächern, Heckklappen, Motorhauben, Kotflügeln, Stoßstangen, Spoilern, Schwellern, Schutzleisten, seitlichen Verkleidungen u.Ä., sowie der Lackierung von Nutzfahrzeugen, wie beispielsweise von Lastkraftfahrzeugen, kettenbetriebenen Baufahrzeugen, wie z.B. Kranfahrzeugen, Radladern und Betonmischern, Omnibussen, Schienenfahrzeugen, Wasserfahrzeugen, Fluggeräten sowie landwirtschaftlichen Geräten wie Traktoren und Mähdreschern, und Teilen hiervon, sowie von Möbeln, Fenstern und Türen; von Kunststoffformteilen, insbesondere CDs und Fenster; von industriellen Kleinteilen, von Coils, Containern und Emballagen; von weißer Ware; von Folien; von optischen, elektrotechnischen und mechanische Bauteilen sowie von Glashohlkörpern und Gegenständen des täglichen Bedarfs.

Die erfindungsgemäßen Beschichtungsmittelzusammensetzungen können daher beispielsweise auf ein ggf. vorbeschichtetes Substrat aufgebracht werden, wobei die erfindungsgemäßen Beschichtungsmittel sowohl pigmentiert als auch unpigmentiert sein können. Bevorzugt werden die erfindungsgemäßen Beschichtungsmittelzusammensetzungen als Klarlack verwendet. Aufgrund der hydrophoben Eigenschaften bei gleichzeitig guten mechanischen und photochemischen Beständigkeiten werden sie auch zur permanenten wasser- und schmutz-abweisenden Oberflächenbeschichtung verschiedenster ggf. vorbeschichteter Substrate eingesetzt.

Besonders bevorzugt werden die erfindungsgemäßen Beschichtungsmittelzusammensetzungen in Beschichtungsverfahren eingesetzt, bei dem auf ein gegebenenfalls vorbeschichtetes Substrat eine Schicht mit der erfindungsgemäßen Beschichtungsmittelzusammensetzung aufgetragen wird. Als ggf. vorbeschichtetes Substrat kommen dabei insbesondere Luftfahrzeuge oder Windenergieanlagen oder ein oder mehrere Teile hiervon, insbesondere die Windenergieanlagen-Rotorblätter, in Betracht.

Außerdem werden die erfindungsgemäßen Beschichtungsmittelzusammensetzungen auch in Verfahren eingesetzt, bei dem auf ein gegebenenfalls vorbeschichtetes Substrat zunächst eine pigmentierte Basislackschicht und danach eine Schicht mit der erfindungsgemäßen Beschichtungsmittelzusammensetzung aufgetragen werden. Gegenstand der Erfindung sind daher auch effekt- und/oder farbgebende Mehrschichtlackierungen aus mindestens einer pigmentierten Basislackschicht und mindestens einer darauf angeordneten Klarlackschicht, die dadurch gekennzeichnet sind, dass die Klarlackschicht aus der erfindungsgemäßen Beschichtungsmittelzusammensetzung hergestellt worden ist.

Es können sowohl wasserverdünnbare Basislacke als auch Basislacke auf Basis von organischen Lösemitteln eingesetzt werden. Geeignete Basislacke sind beispielsweise in der EP-A-0 692 007 und in den dort in Spalte 3, Zeilen 50ff. angeführten Dokumenten beschrieben. Bevorzugt wird der aufgebrachte Basislack zunächst getrocknet, das heißt dem Basislackfilm wird in einer Abdunstphase wenigstens ein Teil des organischen Lösemittels beziehungsweise des Wassers entzogen. Die Trocknung erfolgt vorzugsweise bei Temperaturen von Raumtemperatur bis 80°C. Nach der Trocknung wird die erfindungsgemäße Beschichtungsmittelzusammensetzung aufgebracht. Anschließend wird die Zweischichtlackierung bevorzugt unter bei der Automobilserienlackierung angewandten Bedingungen bei Temperaturen von 20 bis 200°C während einer Zeit von 1 min bis zu 10 h eingebrannt, wobei bei den für die Automobilreparaturlackierung angewandten Temperaturen, die im Allgemeinen zwischen 20 und 80°C, insbesondere zwischen 20 und 60°C liegen, auch längere Härtungszeiten zur Anwendung kommen können.

In einer weiteren bevorzugten Ausführungsform der Erfindung wird die erfindungsgemäße Beschichtungsmittelzusammensetzung als transparenter Klarlack zur Beschichtung von Kunststoffsubstraten, insbesondere von Kunststoff-Anbauteilen, eingesetzt. Die Kunststoffanbauteile werden bevorzugt ebenfalls in einem mehrstufigen Beschichtungsverfahren beschichtet, bei dem auf ein gegebenenfalls vorbeschichtetes oder ein zur besseren Haftung der nachfolgenden Beschichtungen vorbehandeltes Substrat (z.B. Beflammen, Corona- oder Plasma-Behandlung des Substrats) zunächst eine pigmentierte Basislackschicht und danach eine Schicht mit der erfindungsgemäßen Beschichtungsmittelzusammensetzung aufgetragen werden.

Die zu beschichtenden Kunststoffteile bestehen üblicherweise aus ASA, Polycarbonaten, Blends aus ASA und Polycarbonaten, Polypropylen, Polymethylmethacrylaten oder schlagzäh modifizierte Polymethylmethacrylaten, insbesondere aus Blends aus ASA und Polycarbonaten, bevorzugt mit einem Polycarbonatanteil > 40%, insbesondere > 50%, verwendet.

Unter ASA werden dabei im Allgemeinen schlagzähmodifizierte Styrol/- Acrylnitril-Polymerisate verstanden, bei denen Pfropfcopolymerisate von vinylaromatischen Verbindungen, insbesondere Styrol, und von Vinylcyaniden, insbesondere Acrylnitril, auf Polyalkylacrylatkautschuken in einer Copolymermatrix aus insbesondere Styrol und Acrylnitril, vorliegen.

Ganz besonders bevorzugt werden die erfindungsgemäßen Beschichtungsmittelzusammensetzungen auf den äußerst anspruchsvollen Gebiet der Beschichtungsverfahren von Luftfahrzeugen und Windenergieanlagen oder Teilen hiervon, insbesondere von Windenergie-Rotorblättern, vor allem als Decklackierung (= äußerste Lackschicht) auf Rotorblättern von Windenergieanlagen, eingesetzt.

Gegenstand der vorliegenden Erfindung ist daher auch Verwendung der erfindungsgemäßen Beschichtungsmittelzusammensetzungen für die Antiicing-Beschichtung von Luftfahrzeugen oder Windenergieanlagen oder Teilen hiervon, insbesondere für die Antiicing-Beschichtung von Rotorblättern von Windenergieanlagen.

Ferner betrifft die Erfindung auch die Verwendung der erfindungsgemäßen Beschichtungsmittelzusammensetzungen für die Beschichtung von Luftfahrzeugen oder von Rotorblättern von Windenergieanlagen zur Verminderung des durch Bewegung derselben erzeugten Schalls.

Gegenstand der vorliegenden Erfindung sind daher auch Windenergieanlagen oder ein oder mehrere Teile einer Windenergieanlage mit einer - ggf. mehrschichtigen - Lackierung, die dadurch gekennzeichnet sind, dass die oberste Lackschicht aus einer erfindungsgemäßen Beschichtungsmittelzusammensetzung hergestellt worden ist.

### Beispiele 1 bis 3

### Herstellung des erfindungsgemäßen Fluormonomers 1

83 g Isophorondiisocyanat werden in einem 1 I Dreihalskolben, ausgestattet mit Rührer, Rückflusskühler, Thermometer und Tropftrichter zusammen mit 0,1 g Dibutylzinndilaurat vorgelegt. Der Dreihalskolben wird auf 55°C erhitzt, über den Tropftrichter werden dann langsam 40,7 g des handelsüblichen Fluoralkohols auf Basis 2-(perfluorhexyl)-ethanol (Handelsprodukt Daikin A-1620 der Firma Daikin Industries Ltd, Osaka, Japan) zugegeben. Es wird ein NCO-Gehalt, bestimmt durch die unten beschriebene Titration mit Dibutylamin, von 6,85% erhalten. Danach werden, ebenfalls bei 55°C, 14,5 g Hydroxyethylmethacrylat zugetropft. Es werden noch 5,2 g Butylacetat zugesetzt. Nach Erreichen eines NCO-Gehaltes von unter 0,01% wird abgekühlt. Die so erhaltenene klare, farblose Lösung hat einen Gehalt von 93,3 Gew.-% Fluormonomer.

### Herstellung des erfindungsgemäßen Fluormonomers 2

1 mol Hydroxyethylmethacrylat werden mit 2 mol Epsilon-Caprolacton unter Zugabe von 50 ppm Dibutylzindilaurat bei 120°C für 2 h gerührt. Das Reaktionsprodukt wird dann zu einem Reaktionsprodukt aus 1 mol Fluoralkohol und 1mol IPDI bei 55°C zugetropft.

### Herstellung des erfindungsgemäßen Fluormonomers 3

1 mol Hydroxyethylmethacrylat werden mit 4 mol Epsilon-Caprolacton unter Zugabe von 50 ppm Dibutylzindilaurat bei 120°C für 2 h gerührt. Das Reaktionsprodukt wird dann zu einem Reaktionsprodukt aus 1 mol Fluoralkohol und 1mol IPDI bei 55°C zugetropft

### Bestimmung des NCO-Gehaltes des Fluormonomers:

Der Gehalt an nicht umgesetzten NCO wird mit Dibutylamin gegen Bromphenolblau mittels Titration mit 0,5n Salzsäure folgendermaßen bestimmt:
Vor der eigentlichen Titration wird eine Blindwertbestimmung durchgeführt. Bei der Blindwertbestimmung wird eine definiert zugegebene Menge Dibutylamin unter Verwendung von Bromphenolblau als Indikator mit 0,5 mol/l wässriger Salzsäure von blau nach gelb (pH = 4,6 (blau) → pH = 3,0 (gelb)) titriert. Dieser Verbrauch wird als "Verbrauch im Blindversuch" berücksichtigt.

Bei der Haupttitration reagiert die Probe mit Dibutylamin vollständig ab. Dabei wird die N-C-Doppelbindung geöffnet und Dibutylamin lagert sich an. Es entsteht ein Harnstoffderivat. Das nicht umgesetzte Dibutylamin wird unter Verwendung von Bromphenolblau als Indikator mit 0,5 mol/l wässriger Salzsäure von blau nach gelb zurücktitriert. Der Farbumschlag muß etwa 30 s erhalten bleiben. Dieser Verbrauch wird als "Verbrauch im Hauptversuch" berücksichtigt.

### Herstellung erfindungsgemäßer Polymerlösungen mit verschiedenen Fluor-Monomeren

In einem 4 I Edelstahl-Druckreaktor, temperiert über einen Öl-geheizten Edelstahlmantel, ausgestattet mit einem Ankerrührer, Rückflusskühler und Thermometer werden 911,1g Butylacetat vorgelegt. Nach Spülen der Apparatur mit Stickstoff wird bei r einem Überdruck von 2,5bar, erzeugt mit Stickstoff wird der Reaktor auf 160°C aufgeheizt. Mittels Membranpumpen wird dann 1200 g des jeweiligen Monomerengemisches über 4 Stunden dosiert. Parallel, mit einem zeitlichen Vorlauf von 10 min und mit einer Zulaufzeit von insgesamt 4,75 Stunden, wird ebenfalls über eine Membranpumpe in einer Menge von 7,0 Gew.-%, bezogen auf die Monomermenge, einer 50% ige Lösung von di-tert. Butylperoxid (DTBP) in Butylacetat zudosiert. Nach weiteren 60 Minuten bei 160°C wird abgekühlt und der Reaktor entspannt.
Die nach obigem Verfahren erhaltenen Polymerlösungen wurden mittels Butylacetat auf eine Feststoffanteil von ca 60% verdünnt und mittels eines 100 µm Kastenrakels auf Glastafeln aufgezogen. Die Messung der Kontaktwinkel erfolgte nach einer Trocknung bei 130°C für 30 Minuten an diesen Filmen.

Zur Bestimmung der Hydrophobizität der Beschichtung wird auf die zu untersuchende Oberfläche der gehärteten Beschichtung ein Wassertropfen appliziert. Unter dem Mikroskop wird dann der Kontakwinkel (H) durch Ermittlung der Tangente am Kontaktpunkt des Wassertropfens mit der Lackoberfläche mit Hilfe des mobilen Kontaktwinkel-Messsystems Mobiledrop der Firma Krüss gemessen. Analog wird der Kontaktwinkel gegenüber Dijodmethan ermittelt. Zur Messung wird der Messkopf auf die Probe gestellt. Der Dosierhebel senkt die Dosierkanüle ab und dosiert den Tropfen. Eine Prismenanordnung lenkt das Profilbild des Tropfens über eine integrierte Kamera in das angeschlossene Notebook um. Dort erfolgt mit Hilfe der KRÜSS-Software SW23 (DSA2) die Auswertung des Tropfenvideos und die Bestimmung des Kontaktwinkels.

**Tabelle 1: Zusammensetzung der Perfluoralkylalkylgruppen-haltigen Poly(meth)acrylate der Beispiele 1 bis 3 in Gew.-% und Kennzahlen**

| | Beispiel 1 | Beispiel 2 | Beispiel 3 |
|---|---|---|---|
| Butylacrylat | 22,00% | 22,00% | 22,00% |
| Methylmethacrylat | 15,50% | 15,50% | 15,50% |
| Hydroxiethylmethacrylat | 32,00% | 32,00% | 32,00% |
| Styrol | 30,00% | 30,00% | 30,00% |
| Fluormonomer 1 (HEMA/IPDI/F-Alkohol) | 5,00% | | |
| Fluormonomer 2 (HEMA/2e-CAP/IPDI/F-Alkohol) | | 5,00% | |
| Fluormonomer 3 (HEMA/4e-CAP/IPDI/F-Alkohol) | | | 5,00% |
| Acrylsäure | 0,50% | 0,50% | 0,50% |
| DTBP | 7,00% | 7,00% | 7,00% |
| FK theor | 77,5 | 77,5 | 77,5 |
| FK NP | 74,6 | 74,6 | 75,40% |
| SZ [mgKOH/g] | 11 | 10 | 11 |
| Viskosität [mPas] | 511 | 513,0 | 444,0 |
| Mw: | 5815 | 6360 | 6008 |
| Mn: | 2020 | 2112 | 2084 |
| Aussehen | trüb | trüb | trüb |
| Kontaktwinkel H₂0 [°] | 116 | 118 | 119 |
| | +/- 2.3 | +/- 1.3 | +/- 1.7 |
| Kontaktwinkel CH2J2 [°] | 87 | 82 | 90 |
| | +/-2.8 | +/-2.4 | +/- 3.4 |

### Erläuterungen zu Tabelle 1:

Mw = gewichtsmittleres Molekulargewicht, gemessen mit Gelpermeationschromatographie (GPC) gegen einen Polystyrolstandard
Mn = zahlenmittleres Molekulargewicht, gemessen mit Gelpermeationschromatographie (GPC) gegen einen Polystyrolstandard
FK NP = (Feststoffgehalt nach Beendigung der Polymerisationsreaktion) 1 g der zu messenden Substanz wird mit 1 g Butylacetat auf einem Träger (Blechdeckel) vermischt und in einem Umluftofen für 60 Minuten bei 130°C getrocknet.
SZ = gemessene Säurezahl in mgKOH/g
Viskosität: gemessen bei 23°C mit einem Rotationsviskosimeter der Fa. Brookfield, Typ CAP 2000+, Spindel 3, RPM 1000 bzw.Scherrate 13333 s⁻¹
Kontaktwinkel H₂0: gemessener Kontaktwinkel gegenüber Wasser
Kontaktwinkel CH2J2:gemessener Kontaktwinkel gegenüber Dijodmethan

Es zeigten alle untersuchten Fluor-Monomere, dass sie in gleicher Weise in ein Polymer eingebaut werden können und auch einen vergleichbaren Effekt hinsichtlich der Oberflächenspannung zeigen. Da sich das Fluormonomer 1 mit dem geringsten chemischen Aufwand herstellen lässt, wurden weitere Versuche mit diesem Monomer 1 durchgeführt.

### Beipiele 4 bis 20

Zur Ermittlung der optimalen Rezeptur hinsichtlich Tg, OH-Zahl und Gehalt an Fluormonomer wurden nach folgendem Grundrezept Polymerisationen mittels einer High throughput Anlagedurchgeführt. Die Ansatzgröße für alle Synthesen betrug ca. 200ml.
Als variable Komponenten wurden folgende Monomere eingesetzt:
Hydroxyethylmethacrylat (HEMA)
n-Butylacrylat (nBA)
Styrol (Sty)
Methylmethacrylat (MMA)
Fluorhaltiges Monomer (1)

Folgende Rahmenbedingungen der Polymersiation wurden festgelegt: Temperatur der Polymerisation. 110°C, Zulaufzeiten 3h Monomermischung, 3,5h Initiatorlösung, 1h Nachpolymerisation, Initiator 7% auf Monomere, Initiatorlösung in Methylisobutylketon (25%ig bzw. 17,4%ig)

**Tabelle 2: Zusammensetzung der Perfluoralkylalkylgruppen-haltigen Poly(meth)acrylate der Beispiele 4 bis 20 in Gew.-%**

| Beispiel | HEMA | Fluormonomer 1 | MMA+Sty+nBA | Tg [°C] | Tg [K] | Sty | nBA | MMA | OH-Zahl berechnet |
|---|---|---|---|---|---|---|---|---|---|
| | | | | | | | | | [mgKOH/g] |
| 4 | 20,00% | 0,10% | 79,90% | 0 | 273,15 | 12,49% | 55,02% | 12,49% | 80,47 |
| 5 | 35,00% | 0,10% | 64,90% | 0 | 273,15 | 6,79% | 51,42% | 6,79% | 140,83 |
| 6 | 20,00% | 5,00% | 75,00% | 0 | 273,15 | 12,49% | 55,02% | 12,49% | 75,22 |
| 7 | 35,00% | 5,00% | 60,00% | 0 | 273,15 | 6,79% | 51,42% | 6,79% | 131,63 |
| 8 | 20,00% | 0,10% | 79,90% | 30 | 303,15 | 23,09% | 33,82% | 23,09% | 80,47 |
| 90 | 35,00% | 0,10% | 64,90% | 30 | 303,15 | 17,39% | 30,22% | 17,39% | 140,83 |
| 10 | 20,00% | 5,00% | 75,00% | 30 | 303,15 | 23,09% | 33,82% | 23,09% | 75,22 |
| 11 | 35,00% | 5,00% | 60,00% | 30 | 303,15 | 17,39% | 30,22% | 17,39% | 131,63 |
| 12 | 20,00% | 2,55% | 77,45% | 15 | 288,15 | 18,07% | 43,87% | 18,07% | 77,76 |
| 13 | 35,00% | 2,55% | 62,45% | 15 | 288,15 | 12,37% | 40,27% | 12,37% | 136,07 |
| 14 | 27,50% | 0,10% | 72,40% | 15 | 288,15 | 15,22% | 42,07% | 15,22% | 110,65 |
| 15 | 27,50% | 5,00% | 67,50% | 15 | 288,15 | 15,22% | 42,07% | 15,22% | 103,42 |
| 16 | 27,50% | 2,55% | 69,95% | 0 | 273,15 | 9,64% | 53,22% | 9,64% | 106,92 |
| 17 | 27,50% | 2,55% | 69,95% | 30 | 303,15 | 20,24% | 32,02% | 20,24% | 106,92 |
| 18 | 27,50% | 2,55% | 69,95% | 15 | 288,15 | 15,22% | 42,07% | 15,22% | 106,92 |
| 19 | 27,50% | 2,55% | 69,95% | 15 | 288,15 | 15,22% | 42,07% | 15,22% | 106,92 |
| 20 | 27,50% | 2,55% | 69,95% | 15 | 288,15 | 15,22% | 42,07% | 15,22% | 106,92 |

**Tabelle 3: Kennzahlen der Perfluoralkylalkylgruppen-haltigen Poly(meth)acrylate der Beispiele 4 bis 20**

| Beispiel | FK 160°C | Mw [g/mol] | Mn [g/mol] |
|---|---|---|---|
| 4 | 53,66 | 13879 | 5637 |
| 5 | 50,78 | 15294 | 6675 |
| 6 | 53,02 | 13776 | 5680 |
| 7 | 51,83 | 16606 | 7026 |
| 8 | 52,55 | 13538 | 6137 |
| 9 | 53,63 | 14491 | 6671 |
| 10 | 55,43 | 13207 | 5668 |
| 11 | 55,54 | 15933 | 7027 |
| 12 | 52,62 | 13817 | 5896 |
| 13 | 52,36 | 14957 | 6733 |
| 14 | 52,52 | 16101 | 6901 |
| 15 | 53,22 | 15494 | 6357 |
| 16 | 52,31 | 14495 | 6412 |
| 17 | 52,79 | 15881 | 6863 |
| 18 | 52,22 | 15138 | 6659 |
| 19 | 51,31 | 15109 | 6567 |
| 20 | 50,17 | 14961 | 6553 |

| | | | |
|---|---|---|---|
| FK = Feststoffgehalt: 1 g der zu messenden Substanz wird mit 1 g Butylacetat auf einem Träger (Blechdeckel) vermischt und in einem Umluftofen für 60 Minuten bei 130°C getrocknet. Mw = gewichtsmittleres Molekulargewicht, gemessen mit Gelpermeationschromatographie (GPC) gegen einen Polystyrolstandard Mn = zahlenmittleres Molekulargewicht, gemessen mit Gelpermeationschromatographie (GPC) gegen einen Polystyrolstandard | | | |

### Herstellung der Beschichtungsmittel der Beispiele 4 bis 20

Aus den so erhaltenen Poly-Acrylatlösungen werden anschließend Klarlacke formuliert. Dazu werden zunächst jeweils 1,762 Teile Benzoesäure in der in Tabelle 4 angegebenen Menge Acrylatharzlösung unter Rühren gelöst. Anschließend werden jeweils die in Tabelle 4 angegebene Menge Methylisobutylketon, 0,132 Teile einer 10%igen Lösung von Dibutylzinndilaurat in Butylacetat, 0,881 Teile eines handelsüblichen Lichtschutzmittelgemisches bestehend aus UV- und HALS Lichtschutzmittel (1:1) und 0,0655 Teile eines Verlaufsmittels auf Basis fluorhaltiger Acrylate unter Rühren vermischt. Nach Zugabe eines niedrigviskosen Polyisocyanathärters auf Basis trimerisiertes, Isocyanuratgruppen aufweisendes Hexamethylendiisocyanat (HDI) mit einem Isocyanatgehalt von 23,4 %, bezogen auf das lösemittelfreie trimerisierte Hexamethylendiisocyanat, (Desmodur® N3600 der Fa. BAYER) in einer solchen Menge (in Tabelle 4 angegebene Menge), dass die Stöchiometrie OH/NCO = 1:1,1 liegt, werden die Filme auf Glastafeln aufgezogen (ca 100 µm Nassfilmschichtdicke). Man lässt ca. 30 Minuten ablüften und trocknet die Filme dann bei 60°C für 30 Minuten. Die Messung der Kontaktwinkel erfolgte nach einer Trocknung bei 130°C für 30 Minuten an diesen Filmen.

**Tabelle 4: Zusammensetzung der Beschichtungsmittel auf Basis der Perfluoralkylalkylgruppen-haltigen Poly(meth)acrylate der Beispiele 4 bis 20 in Gew.-Teilen**

| Beispiel | Polymer | MiBK | Härter | DBTL (10%ig ) | Tinuvin® 5941-R*1) | Byk 325*2) | Benzoe-säurels. | Summe |
|---|---|---|---|---|---|---|---|---|
| 4 | 26,88 | 0,00 | 8,047 | 0,132 | 0,881 | 0,062 | 1,762 | 37,76 |
| 5 | 22,39 | 0,00 | 11,101 | 0,132 | 0,881 | 0,062 | 1,762 | 36,33 |
| 6 | 27,85 | 0,00 | 7,702 | 0,132 | 0,881 | 0,062 | 1,762 | 38,39 |
| 7 | 22,67 | 0,10 | 10,722 | 0,132 | 0,881 | 0,062 | 1,762 | 36,32 |
| 8 | 27,45 | 0,00 | 8,047 | 0,132 | 0,881 | 0,062 | 1,762 | 38,33 |
| 9 | 21,20 | 1,18 | 11,101 | 0,132 | 0,881 | 0,062 | 1,762 | 36,32 |
| 10 | 26,64 | 0,00 | 7,702 | 0,132 | 0,881 | 0,062 | 1,762 | 37,18 |
| 11 | 21,15 | 1,61 | 10,722 | 0,132 | 0,881 | 0,062 | 1,762 | 36,32 |
| 12 | 27,74 | 0,00 | 7,871 | 0,132 | 0,881 | 0,062 | 1,762 | 38,45 |
| 13 | 22,08 | 0,50 | 10,908 | 0,132 | 0,881 | 0,062 | 1,762 | 36,32 |
| 14 | 24,21 | 0,00 | 9,755 | 0,132 | 0,881 | 0,062 | 1,762 | 36,80 |
| 15 | 24,59 | 0,00 | 9,384 | 0,132 | 0,881 | 0,062 | 1,762 | 36,81 |
| 16 | 24,67 | 0,00 | 9,566 | 0,132 | 0,881 | 0,062 | 1,762 | 37,07 |
| 17 | 24,44 | 0,00 | 9,566 | 0,132 | 0,881 | 0,062 | 1,762 | 36,85 |
| 18 | 24,71 | 0,00 | 9,566 | 0,132 | 0,881 | 0,062 | 1,762 | 37,11 |
| 19 | 25,15 | 0,00 | 9,566 | 0,132 | 0,881 | 0,062 | 1,762 | 37,55 |
| 20 | 25,72 | 0,00 | 9,566 | 0,132 | 0,881 | 0,062 | 1,762 | 38,12 |

| | | | | | | | | |
|---|---|---|---|---|---|---|---|---|
| Benzoesäurelösung = 25% in MIBK *1= handelsübliches Lichtschutzmittelgemisch der Firma BASF SE *2 = handelsübliches Verlaufsmittel der Firma Byk Chemie GmbH auf Basis eines polyethermodifizierten Merthylalkylpolysiloxans | | | | | | | | |

**Tabelle 5: Ergebnisse der Bestimmung der Kontaktwinkel gegen Wasser der Beschichtungen der Beispiele 4 bis 20**

| Beispiel | Messung 1 [°] | Messung 2 [°] | Messung 3 [°] | Mittelwert [°] | Standardabweichung [%] |
|---|---|---|---|---|---|
| 4 | 73,7 | 70,9 | 75,8 | 73,5 | 2,46 |
| 5 | 72,7 | 72,3 | 71,4 | 72,1 | 0,67 |
| 6 | 117,8 | 117,9 | 117,5 | 117,7 | 0,21 |
| 7 | 115,2 | 113,3 | 116,1 | 114,9 | 1,43 |
| 8 | 71 | 69,2 | 68,7 | 69,6 | 1,21 |
| 9 | 67,8 | 70,4 | 66,5 | 68,2 | 1,99 |
| 10 | 113,2 | 110,5 | 114,9 | 112,9 | 2,22 |
| 11 | 112,1 | 111,3 | 112 | 111,8 | 0,44 |
| 12 | 110,6 | 109,3 | 107,7 | 109,2 | 1,45 |
| 13 | 108,7 | 109 | 109,2 | 109,0 | 0,25 |
| 14 | 66,2 | 68,2 | 66 | 66,8 | 1,22 |
| 15 | 109,6 | 108,2 | 107,7 | 108,5 | 0,98 |
| 16 | 104,2 | 103,1 | 102,8 | 103,4 | 0,74 |
| 17 | 106 | 104,2 | 104,8 | 105,0 | 0,92 |
| 18 | 105,9 | 106,6 | 104,6 | 105,7 | 1,01 |
| 19 | 100 | 103,4 | 103,2 | 102,2 | 1,91 |
| 20 | 103,6 | 104,3 | 103,9 | 103,9 | 0,35 |

Außerdem wurden von den Beschichtungen der Beispiele 4 bis 20 noch die Fischer Scope Härten bestimmt. Die Prüfung erfolgte gemäß Vickershärte HV Verfahren mit dem Gerät HP100VP X-Prog der Helmut Fischer GmbH (Eindringverfahren zur Härteprüfung DIN 50133, Härtemeßverfahren). Hierbei wird ein pyramidenförmiger Diamant mit einer definierten Kraftzunahme in eine Probe eingedrückt. Die verwendeten Parameter sind:
Prüfkrafterhöhung 1mN/s
Pause von 15s (creep)
Prüfkraftabsenkung 1mN/s
Pause von 15s bei 0mN

Die Zeit der Krafterhöhung: 20 Sekunden lang wird bis auf 20mN erhöht. Während der gesamten Zeit erfolgt die Wegemessung. Aus der Kraft-Wege-Kurve läßt sich u.a. die Härte berechnen:
HU Universalhärte in N/mm² bei max. Prüfkraft. Eine durchgeführte Formkorrektur wird nicht berücksichtigt. Zur Berücksichtigung der Formkorrektur Kontrollfeld korr. einschalten.
Y Elastischer Eindringmodul in GPa (MPa). Die Formkorrektur wird immer berücksichtigt.
We/Wtot Elastischer Verformungsanteil (hHU) in %. Quotient aus elastischer Verformungsenergie (We) und gesamter Verformungsenergie
Wtot Plastischer und elastischer Anteil der Eindringarbeit. Die Formkorrektur wird immer berücksichtigt.
Cr 1 Kriechen unter Last in %. Materialverhalten bei konstanter max. Prüfkraft. Die Formkorrektur wird immer berücksichtigt.
Cr 2 Kriechen unter Last in %. Materialverhalten bei konstanter (vorgegebener) min. Prüfkraft nach Kraftreduzierung. Die Formkorrektur wird immer berücksichtigt.
hmax Eindringtiefe in µm (nm) des Indentors bei max. Prüfkraft.

Eine durchgeführte Formkorrektur wird nicht berücksichtigt. Zur Berücksichtigung der Formkorrektur Kontrollfeld korr. einschalten.
korr. Mit Einschalten des Kontrollfeldes werden die Kenngrößen HU, HU(h), HU(F), HU Cr, h(F) und hmax um die reale Form des Indentors korrigiert. Die durchgeführte Formkorrektur wird jeweils berücksichtigt.

**Tabelle 6: Ergebnisse der Messung der Oberflächenhärte nach Fischer Scope der Beschichtungsmittel der Beispiele 4 bis 20**

| | [N/mm²] | [GPa] | [%] | [%] | [%] | [µm] |
|---|---|---|---|---|---|---|
| Probe | HU k | Y | We/Wtot | Cr 1 | Cr 2 | hmax k |
| 4 | 32,7 | 2,07 | 15,6 | 20,5 | -11,6 | 4,80 |
| 5 | 94,1 | 2,50 | 36,6 | 10,9 | -14,2 | 2,83 |
| 6 | 26,2 | 2,21 | 13,2 | 24,3 | -11,9 | 5,36 |
| 7 | 91,4 | 2,48 | 35,4 | 11,3 | -14,1 | 2,87 |
| 8 | 114,8 | 3,06 | 36,5 | 10,0 | -12,5 | 2,56 |
| 9 | 126,1 | 3,22 | 40,1 | 8,4 | -12,8 | 2,45 |
| 10 | 112,1 | 3,05 | 36,0 | 10,0 | -12,7 | 2,59 |
| 11 | 71,7 | 2,41 | 26,9 | 14,9 | -11,8 | 3,24 |
| 12 | 124,5 | 3,18 | 39,8 | 8,5 | -13,0 | 2,46 |
| 13 | 110,8 | 2,86 | 38,8 | 9,5 | -13,7 | 2,61 |
| 14 | 102,0 | 2,78 | 35,7 | 10,8 | -13,2 | 2,72 |
| 15 | 107,1 | 2,87 | 36,9 | 10,2 | -13,4 | 2,65 |
| 16 | 61,7 | 2,10 | 26,8 | 15,6 | -13,3 | 3,50 |
| 17 | 120,0 | 3,17 | 37,8 | 9,2 | -12,7 | 2,51 |
| 18 | 99,3 | 2,69 | 35,7 | 10,9 | -13,4 | 2,76 |
| 19 | 103,0 | 2,78 | 36,2 | 10,5 | -13,5 | 2,71 |
| 20 | 99,3 | 2,76 | 34,9 | 10,9 | -13,5 | 2,76 |

### Beispiele 21 bis 23

Die durch den statistischen Versuchsplan erhaltenen Ergebnisse wurden in einer Auswahl von Rezepten hinsichtlich ihrer Scale-Up Fähigkeit geprüft. Dazu wurden (entsprechend Tabelle 7) die folgenden Polyacrylate im Pilotmassstab hergestellt. Dabei wurden die Rezepturen mit
- niedrigem Gehalt an Fluormonomer bei niedrigem Gesamt-Tg (Beispiel 21)
- hohem Fluorgehalt bei niedrigem Tg (Beispiel 22)
- hohem Fluorgehalt bei hohem Tg und höhere OH-Zahl (Beispiel 23)
geprüft.

Alle Harze waren klar und zeigten keine Gelteilchen. Die Rezeptur des Beispiels 23 wurde dann zu einem Klarlack formuliert um damit dann die Haftung zu prüfen.

### Polyacrylatharze der Beispiele 21 bis 23

In einem 4 I Edelstahlreaktor, temperiert über einen Öl-geheizten Edelstahlmantel, ausgestattet mit einem Ankerrührer, Rückflusskühler und Thermometer wird die in Tabelle 7 als Vorlage aufgeführte Menge Methylisobutylketon (MIBK) vorgelegt. Unter Überschleierung mit Stickstoff wird der Reaktor auf 110°C aufgeheizt. Mittels Membranpumpen wird dann 1200 g des jeweiligen Monomerengemisches über 4 Stunden dosiert. Parallel, mit einem zeitlichen Vorlauf von 10 min und mit einer Zulaufzeit von insgesamt 4,75 Stunden, wird ebenfalls über eine Membranpumpe eine 50% ige Lösung von tertiär-Butyl-per-2-ethylhexanoat (TBPEH) in Methylisobutylketon (MIBK) zudosiert. Nach weiteren 60 Minuten bei 110°C wird abgekühlt.

**Tabelle 7: Zusammensetzung der Polyacrylate der Beispiele 21 bis 23 in Gew.-Teilen und berechnete OH-Zahlen der Polyacrylate**

| | OH-Zahl [mgKOH/g] (berechnet) | Vorlage | Monomerenmischung | | | | | Initiatorzulauf | |
|---|---|---|---|---|---|---|---|---|---|
| | | MIBK | HEMA* | Fluormonomer 1 | Styrol | MMA* | nBA* | TBPEH | MIBK |
| Acrylat Beispiel 21 | 150 | 1200 | 239,76 | 1,2 | 149,76 | 149,76 | 659,52 | 25,2 | 25,2 |
| Acrylat Beispiel 22 | 90 | 1200 | 234 | 29,76 | 211,44 | 211,44 | 513,36 | 25,2 | 25,2 |
| Acrylat Beispiel 23 | 150 | 1200 | 409 | 29,84 | 144,7 | 144,7 | 471,2 | 25,2 | 25,2 |

| | | | | | | | | | |
|---|---|---|---|---|---|---|---|---|---|
| *MMA = Methylmethacrylat; nBA = n-Butylacrylat, HEMA = Hydroxyethylmethacrylat | | | | | | | | | |

### Herstellung der Klarlacke und der resultierenden Beschichtungen der Beispiele 21 bis 23:

Aus den so erhaltenen Poly-Acrylatlösungen werden anschließend Klarlacke formuliert. Dazu werden jeweils zu 50 Teilen Acrylatharzlösung 0,03 Teile Dibutylzinndilaurat, 2 Teile eines handelsüblichen Lichtschutzmittelgemisches bestehend aus UV- und HALS Lichtschutzmittel (1:1), 0,15 Teile eines Verlaufsmittels auf Basis fluorhaltiger Acrylate sowie 1 Teil Benzoesäure unter Rühren vermischt. Nach Zugabe eines niedrigviskosen Polyisocyanathärters auf Basis trimerisiertes, Isocyanuratgruppen aufweisendes Hexamethylendiisocyanat (HDI) mit einem Isocyanatgehalt von 23,4 %, bezogen auf das lösemittelfreie trimerisierte Hexamethylendiisocyanat, (Desmodur® N3600 der Fa BAYER) in einer solchen Menge, dass die Stöchiometrie OH/NCO = 1:1,1 liegt, werden die Filme auf Glastafeln aufgezogen (ca 100 µm Nassfilmschichtdicke). Man lässt ca. 30 Minuten ablüften und trocknet die Filme dann bei 60°C für 30 Minuten.

### Kontaktwinkelmessung:

Zur Bestimmung der Hydrophobizität der Beschichtung wird auf die zu untersuchende Oberfläche der gehärteten Beschichtung ein Wassertropfen appliziert. Unter dem Mikroskop wird dann der Kontakwinkel (H) durch Ermittlung der Tangente am Kontaktpunkt des Wassertropfens mit der Lackoberfläche wie oben beschrieben mit Hilfe des mobilen Kontaktwinkel-Messsystems Mobiledrop der Firma Krüss gemessen.

Die Ergebnisse der Beschichtungen der Beispiele 21 bis 23 sind in Tabelle 8 dargestellt. Je kleiner dieser Kontaktwinkel ist, umso besser ist die Benetzung der Oberfläche. Wünschenswert sind für die erfindungsgemäßen Beschichtungen Kontaktwinkel gemessen gegen Wasser von mindestens 65 °, insbesondere von mindestens 90 °.

**Tabelle 8: Ergebnis der Kontaktwinkelmessung**

| Beschichtung | Kontaktwinkel H₂O |
|---|---|
| Beschichtung Beispiel 21 Lack auf Basis Acrylat Beispiel 21, OHZ ca. 150 mgKOH/g | 69,6° |
| Beschichtung Beispiel 22 Lack auf Basis Acrylat Beispiel 22, OHZ ca. 90 mgKOH/g | 107,8° |
| Beschichtung Beispiel 23 Lack auf Basis Acrylat Beispiel 23, OHZ ca. 150 mgKOH/g | 102,7° |

### Bestimmung der Überlackierbarkeit:

Dazu wird auf einem KTL beschichteten Blech (ca. 50 X 50 cm) ein wässriger, rein schwarzer Reparatur-Basislack der Reihe 90 der Firma Glasurit in einer Schichtdicke von 10 - 15 µm aufgebracht und gemäß der Technischen Information Glasurit® RATIO Aqua, Alternative Glasurit® Grundfüller 285-700/-730/790 der Firma Glasurit abgelüftet. Danach wird dann der erfindungsgemäße Klarlack des Beispiels 23 mittels pneumatischer Spritzapplikation in einer Schichtdicke von 40 - 60 µ appliziert. Der Klarlack wird nach Ablüften bei Raumtemperatur von ca. 15 Minuten im Labortrockenofen für 30 Minuten bei 60°C getrocknet.

Nach Lagerung der Tafel von 7 Tagen bei Raumtemperatur wird dann auf die ungeschliffene Klarlackbeschichtung wiederum der wässrige, schwarze Reparatur-Basislack der Reihe 90 der Firma Glasurit, jetzt allerdings in einem auslaufenden Keil mit einer Schichtdicke von 20 µm bis 0 µm appliziert. Man lässt wieder ablüften und lackiert dann den o.g. Klarlack des Beispiels 23 ebenfalls in einem Keil; wobei dieser Klarlack-Keil dann aber um 90° zum Basislack-Keil verdreht ist. Nach Einbrennen im Ofen bei 60°C für 30 Minuten wird dann nach dem Abkühlen die Haftung mittels Gitterschnitt geprüft.
Für den Klarlack des Beispiels 23 zeigte sich auf der ganzen Fläche eine sehr gute Haftung. Somit wurde gezeigt, dass sowohl der nicht modifizierte Basislack auf der erfindungsgemäßen Klarlackbeschichtung als auch der Klarlack auf sich selbst eine hervorragende Haftung aufweist.

## Patentansprüche

1. Nichtwässrige Beschichtungsmittelzusammensetzung enthaltend
(A) 30 bis 80 Gew.-% einer Polyhydroxylgruppen- und (Per)fluoralkyl-gruppen-haltigen Poly(meth)acrylat-Komponente (A),
(B) 20 bis 70 Gew.-% einer oder mehrerer Polyisocyanatgruppenhaltigen Verbindung(en) (B)
und
(D) einen oder mehrere Katalysatoren (D),
wobei die Gew.-%-Angaben der Komponenten (A) und (B) jeweils bezogen sind auf den Bindemittelgehalt der Komponenten (A) bzw. (B) und wobei die Summe der Gewichtsanteile der Komponenten (A) plus (B) jeweils 100 Gew.-% beträgt,
**dadurch gekennzeichnet, dass** die Poly(meth)acrylat-Komponente (A) als Aufbaukomponente 0,05 bis 15,0 Gew.-%, jeweils bezogen auf die Menge aller zur Herstellung der Poly(meth)acrylat-Komponente (A) eingesetzten Verbindungen, eines oder mehrer perfluoralkylgruppenhaltiger Umsetzungsprodukte (U) aus
(i) einem oder mehreren Diisocyanaten (PI) mit zwei unterschiedlich reaktiven Isocyanatgruppen
(ii) einer oder mehreren (Per)fluoralkylmonoalkohol-Komponenten (FA) und
(iii) ggf. einer oder mehrerer Verbindungen (V) mit mindestens einer gegenüber Isocyanatgruppen reaktiven Gruppe (G1) und ggf. einer weiteren, von der Gruppe (G1) verschiedenen funktionellen Gruppe (G2)
enthält.

2. Beschichtungsmittelzusammensetzung nach Anspruch 1, **dadurch gekennzeichnet, dass** die Poly(meth)acrylat-Komponente (A) als (Per)fluoralkylalkohol-Komponente (FA) Perfluoralkohole der allgemeinen Formel (I)
CF₃-(CF₂)ₓ-(CH₂)_{y}-O-A_{z}-H (I)
und/oder der allgemeinen Formel (II)
CR¹₃-(CR²₂)ₓ-(CH₂)_{y}-O-A_{z}-H (II)
enthält,
worin R¹, R² = unabhängig voneinander H, F, CF₃, aber R¹ und R² nicht gleichzeitig H sein dürfen,
x = 1 - 20, y = 1 - 6, z = 0 - 100,
A = CR'R"-CR'''R''''-O oder (CR'R")ₐ-O oder CO-(CR'R")_{b}-O,
R', R", R'", R"" = unabhängig voneinander H, Alkyl, Cycloalkyl, Aryl, beliebiger organischer Rest mit 1 bis 25 C-Atomen, a,b = 3 - 5, ist, wobei es sich bei der Polyalkylenoxid-Struktureinheit A_{z} um Homopolymere, Copolymere oder Blockpolymere aus beliebigen Alkylenoxiden oder um Polyoxyalkylenglykole oder um Polylactone handelt.

3. Beschichtungsmittelzusammensetzung nach Anspruch 1 oder 2, **dadurch gekennzeichnet, dass** die Poly(meth)acrylat-Komponente (A) als (Per)fluoralkylalkohol-Komponente (FA)
F(CF₂CF₂)ₗ-(CH₂CH₂O)ₘ-H (III)
und/oder
CF₃-(CF₂)ₙ-(CH₂)ₒ-O-H (IV)
enthält,
worin l = 1 - 8, m = 1 bis 15, n = 1 bis 12, o = 1 bis 10 ist.

4. Beschichtungsmittelzusammensetzung nach einem der Ansprüche 1 bis 3, **dadurch gekennzeichnet, dass** die Poly(meth)acrylat-Komponente (A) 0,1 bis 10,0 Gew.-%, jeweils bezogen auf die Menge aller zur Herstellung der Poly(meth)acrylat-Komponente (A) eingesetzten Verbindungen, eines oder mehrer fluorhaltiger Umsetzungsprodukte (U) enthält.

5. Beschichtungsmittelzusammensetzung nach einem der Ansprüche 1 bis 4, **dadurch gekennzeichnet, dass** die Poly(meth)acrylat-Komponente (A) als fluorhaltige Aufbaukomponente das Umsetzungsprodukt (U) aus
(i) einem oder mehreren Diisocyanaten (PI) mit zwei unterschiedlich reaktiven Isocyanatgruppen,
(ii) einer oder mehreren (Per)fluoralkylmonoalkohol-Komponenten (FA) und
(iii) einer oder mehreren Verbindungen (V) mit einer gegenüber Isocyanatgruppen reaktiven Gruppe (G1) und mit einer ethylenisch ungesättigten Doppelbindung (G2)
enthält.

6. Beschichtungsmittelzusammensetzung nach einem der Ansprüche 1 bis 5, **dadurch gekennzeichnet, dass** die Poly(meth)acrylat-Komponente (A) als fluorhaltige Aufbaukomponente das Umsetzungsprodukt (U) aus
(i) einem oder mehreren aliphatischen und/oder cycloaliphatischen Diisocyanaten (PI) mit zwei unterschiedlich reaktiven Isocyanatgruppen,
(ii) einer oder mehreren (Per)fluoralkylmonoalkohol-Komponente (FA)
CF₃-(CF₂)ᵣ-(CH₂)ₚ-O-H (V)
worin r = 1 bis 8, bevorzugt r = 1 bis 6, und p = 1 bis 6, bevorzugt p = 1 bis 2, ist,
(iii) einer oder mehreren Verbindungen (V) mit mindestens einer Carboxyl- und/oder Hydroxyl-Gruppe (G1) und mit mindestens einer acrylisch und/oder methacrylisch ungesättigten Doppelbindung (G2), bevorzugt ausgewählt aus der Gruppe Hydroxyalkylacrylat, Hydroxyalkylmethacrylat, mit Lacton umgesetztes Hydroxyalkylacrylat, mit Lacton umgesetztes Hydroxyalkylmethacrylat und deren Mischungen.

7. Beschichtungsmittelzusammensetzung nach einem der Ansprüche 1 bis 6, **dadurch gekennzeichnet, dass** die Poly(meth)acrylat-Komponente (A) aus einem oder mehreren gesättigten Perfluoralkyl- und Polyhydroxyl-gruppenhaltigen Polyacrylaten oder einem oder mehreren gesättigten Perfluoralkyl- und Polyhydroxyl-gruppenhaltigen Polymethacrylaten oder einer Mischung aus einem oder mehreren gesättigten Perfluoralkyl- und Polyhydroxyl-gruppenhaltigen Polyacrylaten und einem oder mehreren gesättigten Perfluoralkyl- und Polyhydroxyl-gruppenhaltigen Polymethacrylaten besteht und/oder die gesättigte Poly(meth)acrylat-Komponente (A) als perfluoralkylgruppenhaltige Aufbaukomponente das Umsetzungsprodukt (U) aus Isophorondiisocyanat, 2-(Perfluorhexyl)-ethanol und Hydroxyethylacrylat und/oder Hydroxyethylmethacrylat und/oder Hydroxyalkylcaprolacton-acrylat und/oder Hydroxyalkylcaprolacton-methacrylat enthält.

8. Beschichtungsmittelzusammensetzung nach einem der Ansprüche 1 bis 7, **dadurch gekennzeichnet, dass** die Poly(meth)acrylat-Komponente (A) als fluorhaltige Aufbaukomponente das Umsetzungsprodukt (U) aus
(i) 1 mol eines oder mehrerer Diisocyanate (PI) mit zwei unterschiedlich reaktiven Isocyanatgruppen,
(ii) 1 mol einer oder mehrerer (Per)fluoralkylmonoalkohol-Komponenten (FA und,
(iii) 1 mol einer oder mehrerer ethylenisch ungesättigter Verbindungen (V) mit einer gegenüber Isocyanatgruppen reaktiven Gruppe (G1)
enthält.

9. Beschichtungsmittelzusammensetzung nach einem der Ansprüche 1 bis 8, **dadurch gekennzeichnet, dass** die als Komponente (A) eingesetzte(n) Poly(meth)acrylat(e) gesättigt sind und aufgebaut sind aus
(a1) 0,05 bis 15,0 Gew.-% eines oder mehrer fluorhaltiger, ethylenisch ungesättigter Umsetzungsprodukte (U),
(a2) 10 bis 50 Gew.-% eines oder mehrerer hydroxylgruppenhaltiger Monomerer,
(a3) 10 bis 89,95 Gew.-% eines oder mehrerer Alkyl-und/oder Cycloalkylester von ethylenisch ungesättigten Carbonsäuren,
(a4) 0 bis 50 Gew.-% eines oder mehrerer vinylaromatischer Verbindungen und
(a5) 0 bis 10 Gew.-% weiterer ethylenisch ungesättigter Monomerer,
wobei die Summe der Gewichtsanteile der Monomeren (a1) bis (a5) jeweils 100 Gew.-% ergibt.

10. Beschichtungsmittelzusammensetzung nach einem der Ansprüche 1 bis 9, **dadurch gekennzeichnet, dass** die als Komponente (A) eingesetzten Poly(meth)acrylate eine OH-Zahl von 60 bis 300 mgKOH/g, bevorzugt von 70 bis 200 mgKOH/g, aufweisen.

11. Beschichtungsmittelzusammensetzung nach einem der Ansprüche 1 bis 10, **dadurch gekennzeichnet, dass** die als Komponente (A) eingesetzten Poly(meth)acrylate eine Glasübergangstemperatur von - 100°C bis +100 °C, bevorzugt von -60 °C bis +60 °C, aufweisen.

12. Beschichtungsmittelzusammensetzung nach einem der Ansprüche 1 bis 11, **dadurch gekennzeichnet, dass** die Beschichtungsmittelzusammensetzung 0,2 bis 15,0 Gew.-%, jeweils bezogen auf den Bindemittelanteil der Summe der Komponenten (A) plus (B), mindestens einer monomeren aromatischen, ggf. substituierten Carbonsäure (S), deren Carboxylgruppe in Konjugation zu einem π-Elektronensystem steht, enthält.

13. Beschichtungsverfahren, **dadurch gekennzeichnet, dass** auf ein gegebenenfalls vorbeschichtetes Substrat eine Schicht aus der Beschichtungsmittelzusammensetzung nach einem der Ansprüche 1 bis 12 aufgebracht wird.

14. Beschichtungsverfahren nach Anspruch 13, **dadurch gekennzeichnet, dass** nach dem Auftrag der Beschichtungsmittelzusammensetzung nach einem der Ansprüche 1 bis 12 bei Temperaturen zwischen 20 und 80°C, insbesondere zwischen 20 und 60°C, gehärtet wird.

15. Beschichtungsverfahren nach Anspruch 13 oder 14, **dadurch gekennzeichnet, dass** das ggf. vorbeschichtete Substrat ein Luftfahrzeug oder eine Windenergieanlage oder ein oder mehrere Teile hiervon, bevorzugt die Windenergieanlagen-Rotorblätter, sind.

16. Beschichtungsverfahren nach einem der Ansprüche 13 bis 15, **dadurch gekennzeichnet, dass** die Beschichtungsmittelzusammensetzung nach einem der Ansprüche 1 bis 12 als äußerste Lackschicht auf Rotorblättern von Windenergieanlagen aufgebracht wird.

17. Verwendung der Beschichtungsmittelzusammensetzung nach einem der Ansprüche 1 bis 12 als Klarlack beziehungsweise Verwendung des Verfahrens nach einem der Ansprüche 13 bis 16 zur permanenten wasser- und schmutzabweisenden Oberflächenbeschichtung.

18. Verwendung der Beschichtungsmittelzusammensetzung nach einem der Ansprüche 1 bis 12 für die Antiicing-Beschichtung von Luftfahrzeugen oder Windenergieanlagen oder Teilen hiervon.

19. Verwendung der Beschichtungsmittelzusammensetzung nach einem der Ansprüche 1 bis 12 für die Beschichtung von Luftfahrzeugen oder von Rotorblättern von Windenergieanlagen zur Verminderung des durch Bewegung derselben erzeugten Schalls.

20. Windenergieanlage oder ein oder mehrere Teile einer Windenergieanlage mit einer - ggf. mehrschichtigen - Lackierung, **dadurch gekennzeichnet, dass** die oberste Lackschicht aus einer Beschichtungsmittelzusammensetzung nach einem der Ansprüche 1 bis 12 hergestellt worden ist.

## Claims

1. Nonaqueous coating material composition comprising
(A) 30% to 80% by weight of a polyhydroxyl and (per)fluoroalkyl group-containing (meth)acrylate component (A),
(B) 20% to 70% by weight of one or more polyisocyanate group-containing compounds (B),
and
(D) one or more catalysts (D),
the weight percentages of components (A) and (B) being based in each case on the binder content of components (A) and (B), respectively, and the sum of the weight fractions of components (A) plus (B) being in each case 100% by weight,
**characterized in that** the poly(meth)acrylate component (A) comprises as a synthesis component 0.05% to 15.0% by weight, based in each case on the amount of all of the compounds used in preparing the poly (meth) acrylate component (A), of one or more perfluoroalkyl group-containing reaction products (U) of
(i) one or more diisocyanates (PI) having two isocyanate groups with different reactivities,
(ii) one or more (per)fluoroalkyl monoalcohol components (FA), and
(iii) optionally one or more compounds (V) having at least one group (G1) that is reactive toward isocyanate groups, and optionally having a further functional group (G2), which is different from group (G1).

2. Coating material composition according to Claim 1, **characterized in that** the poly(meth)acrylate component (A) comprises as (per)fluoroalkyl alcohol component (FA) perfluoroalcohols of the general formula (I)
CF₃-(CF₂)ₓ-(CH₂)_{y}-O-A_{z}-H (I)
and/or of the general formula (II)
CR¹₃-(CR²₂)ₓ-(CH₂)_{y}-O-A_{z}-H (II)
in which R¹ and R² independently of one another are H, F, or CF₃, but R¹ and R² must not simultaneously be H,
x is 1-20, y is 1-6, and z is 0-100,
A is CR'R"-CR'"R""-O or (CR'R")ₐ-O or CO-(CR'R")_{b}-O, R', R", R'", and R"" are independently of one another H, alkyl, cycloalkyl, aryl, or any organic radical having 1 to 25 C atoms, a and b are each 3-5, and the polyalkylene oxide structural unit A_{z} comprises homopolymers, copolymers or block polymers of any desired alkylene oxides, or comprises polyoxyalkylene glycols, or comprises polylactones.

3. Coating material composition according to Claim 1 or 2, **characterized in that** the poly(meth)acrylate component (A) comprises as (per)fluoroalkyl alcohol component (FA)
F(CF₂CF₂)ₗ-(CH₂CH₂O)ₘ-H (III)
and/or
CF₃-(CF₂)ₙ-(CH₂)ₒ-O-H (IV)
in which l is 1-8, m is 1 to 15, n is 1 to 12, and o is 1 to 10.

4. Coating material composition according to any of Claims 1 to 3, **characterized in that** the poly(meth)acrylate component (A) comprises 0.1% to 10.0% by weight, based in each case on the amount of all of the compounds used in preparing the poly (meth) acrylate component (A), of one or more fluorine-containing reaction products (U).

5. Coating material composition according to any of Claims 1 to 4, **characterized in that** the poly(meth)acrylate component (A) comprises as fluorine-containing synthesis component the reaction product (U) of
(i) one or more diisocyanates (PI) having two isocyanate groups with different reactivities,
(ii) one or more (per)fluoroalkyl monoalcohol components (FA), and
(iii) one or more compounds (V) having a group (G1) that is reactive toward isocyanate groups, and having an ethylenically unsaturated double bond (G2) .

6. Coating material composition according to any of Claims 1 to 5, **characterized in that** the poly(meth)acrylate component (A) comprises as fluorine-containing synthesis component the reaction product (U) of
(i) one or more aliphatic and/or cycloaliphatic diisocyanates (PI) having two isocyanate groups with different reactivities,
(ii) one or more (per)fluoroalkyl monoalcohol components (FA)
CF₃-(CF₂)ᵣ-(CH₂)ₚ-O-H (V)
in which r is 1 to 8, preferably r is 1 to 6, and p is 1 to 6, preferably p is 1 to 2,
(iii) one or more compounds (V) having at least one carboxyl and/or hydroxyl group (G1), and having at least one acrylically and/or methacrylically unsaturated double bond (G2), preferably selected from the group consisting of hydroxyalkyl acrylate, hydroxyalkyl methacrylate, hydroxyalkyl acrylate reacted with lactone, hydroxyalkyl methacrylate reacted with lactone, and mixtures thereof.

7. Coating material composition according to any one of Claims 1 to 6, **characterized in that** the poly(meth)acrylate component (A) consists of one or more saturated perfluoroalkyl and polyhydroxyl group-containing polyacrylates or of one or more saturated perfluoroalkyl and polyhydroxyl group-containing polymethacrylates, or of a mixture of one or more saturated perfluoroalkyl and polyhydroxyl group-containing polyacrylates and one or more saturated perfluoroalkyl and polyhydroxyl group-containing polymethacrylates, and/or the saturated poly-(meth)acrylate component (A) comprises as perfluoroalkyl group-containing synthesis component the reaction product (U) of isophorone diisocyanate, 2-(perfluorohexyl)ethanol, and hydroxyethyl acrylate and/or hydroxyethyl methacrylate and/or hydroxyalkylcaprolactone acrylate and/or hydroxyalkylcaprolactone methacrylate.

8. Coating material composition according to any of Claims 1 to 7, **characterized in that** the poly(meth)acrylate component (A) comprises as fluorine-containing synthesis component the reaction product (U) of
(i) 1 mol of one or more diisocyanates (PI) having two isocyanate groups with different reactivities,
(ii) 1 mol of one or more (per)fluoroalkyl monoalcohol components (FA), and
(iii) 1 mol of one or more ethylenically unsaturated compounds (V) having a group (G1) that is reactive toward isocyanate groups.

9. Coating material composition according to any one of Claims 1 to 8, **characterized in that** the poly-(meth)acrylate or acrylates used as component (A) is or are saturated and synthesized from
(a1) 0.05% to 15.0% by weight of one or more fluorine-containing, ethylenically unsaturated reaction products (U),
(a2) 10% to 50% by weight of one or more hydroxyl group-containing monomers,
(a3) 10% to 89.95% by weight of one or more alkyl and/or cycloalkyl esters of ethylenically unsaturated carboxylic acids,
(a4) 0% to 50% by weight of one or more vinylaromatic compounds, and
(a5) 0% to 10% by weight of further ethylenically unsaturated monomers,
the sum of the weight fractions of the monomers (a1) to (a5) being in each case 100% by weight.

10. Coating material composition according to any of Claims 1 to 9, **characterized in that** the poly(meth)acrylates used as component (A) have an OH number of 60 to 300 mg KOH/g, preferably of 70 to 200 mg KOH/g.

11. Coating material composition according to any of Claims 1 to 10, **characterized in that** the poly(meth)acrylates used as component (A) have a glass transition temperature of -100°C to +100°C, preferably of -60°C to +60°C.

12. Coating material composition according to any one of Claims 1 to 11, **characterized in that** the coating material composition comprises 0.2% to 15.0% by weight, based in each case on the binder fraction of the sum of the components (A) plus (B), of at least one monomeric, aromatic, optionally substituted carboxylic acid (S) whose carboxyl group is in conjugation with a π-electron system.

13. Coating method, **characterized in that** a layer of the coating material composition according to any of Claims 1 to 12 is applied to an optionally precoated substrate.

14. Coating method according to Claim 13, **characterized in that** the coating material composition according to any one of Claims 1 to 12, after being applied, is cured at temperatures between 20 and 80°C, more particularly between 20 and 60°C.

15. Coating method according to Claim 13 or 14, **characterized in that** the optionally precoated substrate is an aircraft or a wind energy system, or one or more parts thereof, preferably the rotor blades of the wind energy system.

16. Coating method according to any of Claims 13 to 15, **characterized in that** the coating material composition according to any of Claims 1 to 12 is applied as outermost coating film to rotor blades of wind energy systems.

17. Use of the coating material composition according to any of Claims 1 to 12 as clearcoat material or use of the method according to any of Claims 13 to 16 for permanent water-repellent and soiling-repellent surface coating.

18. Use of the coating material composition according to any of Claims 1 to 12 for anti-icing coating of aircraft or wind energy systems, or parts thereof.

19. Use of the coating material composition according to any of Claims 1 to 12 for the coating of aircraft or of rotor blades of wind energy systems for reducing the noise generated by movement thereof.

20. Wind energy system or one or more parts of a wind energy system having a paint system, optionally a multicoat paint system, **characterized in that** the topmost coating film has been produced from a coating material composition according to any of Claims 1 to 12.

## Revendications

1. Composition d'agent de revêtement non aqueuse, contenant :
(A) 30 à 80 % en poids d'un composant poly(méth)acrylate contenant des groupes polyhydroxyle et des groupes (per)fluoroalkyle (A),
(B) 20 à 70 % en poids d'un ou de plusieurs composés contenant des groupes polyisocyanate (B),
et
(D) un ou plusieurs catalyseurs (D),
les indications de % en poids des composants (A) et (B) se rapportant à chaque fois à la teneur en liant des composants (A) et (B) et la somme des proportions en poids des composants (A) plus (B) étant à chaque fois de 100 % en poids,
**caractérisée en ce que** le composant poly(méth)acrylate (A) contient en tant que composant constitutif 0,05 à 15,0 % en poids, à chaque fois par rapport à la quantité de tous les composés utilisés pour la fabrication du composant poly(méth)acrylate (A), d'un ou de plusieurs produits de réaction contenant des groupes perfluoroalkyle (U) de
(i) un ou plusieurs diisocyanates (PI) contenant deux groupes isocyanate de réactivité différente,
(ii) un ou plusieurs composants monoalcool (per)fluoroalkylique (FA) et
(iii) éventuellement un ou plusieurs composés (V) contenant au moins un groupe (G1) réactif avec les groupes isocyanate et éventuellement un autre groupe fonctionnel (G2) différent du groupe (G1).

2. Composition d'agent de revêtement selon la revendication 1, **caractérisée en ce que** le composant poly(méth)acrylate (A) contient en tant que composant alcool (per)fluoroalkylique (FA) des perfluoroalcools de formule générale (I)
CF₃-(CF₂)ₓ-(CH₂)_{y}-O-A_{z}-H (I)
et/ou de formule générale (II)
CR¹₃-(CR²₂)ₓ-(CH₂)_{y}-O-A_{z}-H (II)
dans lesquelles R¹, R² = indépendamment l'un de l'autre H, F, CF₃ ; R¹ et R² ne pouvant toutefois pas simultanément représenter H,
x = 1 à 20, y = 1 à 6, z = 0 à 100,
A = CR'R"-CR"'R""-O ou (CR'R")ₐ-O ou CO-(CR'R")_{b}-O, R', R", R''', R'''' = indépendamment les uns des autres, H, alkyle, cycloalkyle, aryle, un radical organique quelconque de 1 à 25 atomes C, a, b = 3 à 5,
l'unité structurale oxyde de polyalkylène A_{z} consistant en des homopolymères, des copolymères ou des polymères séquencés d'oxydes d'alkylène quelconques ou en des polyoxyalkylène glycols ou en des polylactones.

3. Composition d'agent de revêtement selon la revendication 1 ou 2, **caractérisée en ce que** le composant poly(méth)acrylate (A) contient en tant qu'alcool (per)fluoroalkylique (FA)
F(CF₂CF₂)ₗ-(CH₂CH₂O)ₘ-H (III)
et/ou
CF₃-(CF₂)ₙ-(CH₂)ₒ-O-H (IV),
dans lesquelles l = 1 à 8, m = 1 à 15, n = 1 à 12, o = 1 à 10.

4. Composition d'agent de revêtement selon l'une quelconque des revendications 1 à 3, **caractérisée en ce que** le composant poly(méth)acrylate (A) contient 0,1 à 10,0 % en poids, à chaque fois par rapport à la quantité de tous les composés utilisés pour la fabrication du composant poly(méth)acrylate (A), d'un ou de plusieurs produits de réaction contenant du fluor (U).

5. Composition d'agent de revêtement selon l'une quelconque des revendications 1 à 4, **caractérisée en ce que** le composant poly(méth)acrylate (A) contient en tant que composant constitutif contenant du fluor le produit de réaction (U) de
(i) un ou plusieurs diisocyanates (PI) contenant deux groupes isocyanate de réactivité différente,
(ii) un ou plusieurs composants monoalcool (per)fluoroalkylique (FA) et
(iii) un ou plusieurs composés (V) contenant un groupe (G1) réactif avec les groupes isocyanate et une double liaison éthyléniquement insaturée (G2).

6. Composition d'agent de revêtement selon l'une quelconque des revendications 1 à 5, **caractérisée en ce que** le composant poly(méth)acrylate (A) contient en tant que composant constitutif contenant du fluor le produit de réaction (U) de
(i) un ou plusieurs diisocyanates aliphatiques et/ou cycloaliphatiques (PI) contenant deux groupes isocyanate de réactivité différente,
(ii) un ou plusieurs composants monoalcool (per)fluoroalkylique (FA)
CF₃-(CF₂)ᵣ-(CH₂)ₚ-O-H (V)
avec r = 1 à 8, de préférence r = 1 à 6 et p = 1 à 6, de préférence p = 1 à 2,
(iii) un ou plusieurs composés (V) contenant au moins un groupe carboxyle et/ou hydroxyle (G1) et au moins une double liaison acryliquement et/ou méthacryliquement insaturée (G2), de préférence choisis dans le groupe constitué par l'acrylate d'hydroxyalkyle, le méthacrylate d'hydroxyalkyle, l'acrylate d'hydroxyalkyle ayant réagi avec de la lactone, le méthacrylate d'hydroxyalkyle ayant réagi avec de la lactone et leurs mélanges.

7. Composition d'agent de revêtement selon l'une quelconque des revendications 1 à 6, **caractérisée en ce que** le composant poly(méth)acrylate (A) est constitué par un ou plusieurs polyacrylates saturés contenant des groupes perfluoroalkyle et polyhydroxyle ou un ou plusieurs polyméthacrylates saturés contenant des groupes perfluoroalkyle et polyhydroxyle ou un mélange d'un ou de plusieurs polyacrylates saturés contenant des groupes perfluoroalkyle et polyhydroxyle et d'un ou de plusieurs polyméthacrylates saturés contenant des groupes perfluoroalkyle et polyhydroxyle, et/ou le composant poly(méth)acrylate saturé (A) contient en tant que composant constitutif contenant des groupes perfluoroalkyle le produit de réaction (U) de diisocyanate d'isophorone, de 2-(perfluorohexyl)-éthanol et d'acrylate d'hydroxyéthyle et/ou de méthacrylate d'hydroxyéthyle et/ou d'acrylate d'hydroxyalkylcaprolactone et/ou de méthacrylate d'hydroxyalkylcaprolactone.

8. Composition d'agent de revêtement selon l'une quelconque des revendications 1 à 7, **caractérisée en ce que** le composant poly(méth)acrylate (A) contient en tant que composant constitutif contenant du fluor le produit de réaction (U) de
(i) 1 mole d'un ou de plusieurs diisocyanates (PI) contenant deux groupes isocyanate de réactivité différente,
(ii) 1 mole d'un ou de plusieurs composants monoalcool (per)fluoroalkylique (FA) et
(iii) 1 mole d'un ou de plusieurs composés éthyléniquement insaturés (V) contenant un groupe (G1) réactif avec les groupes isocyanate.

9. Composition d'agent de revêtement selon l'une quelconque des revendications 1 à 8, **caractérisée en ce que** le ou les poly(méth)acrylates utilisés en tant que composant (A) sont saturés et formés par
(a1) 0,05 à 15,0 % en poids d'un ou de plusieurs produits de réaction éthyléniquement insaturés contenant du fluor (U),
(a2) 10 à 50 % en poids d'un ou de plusieurs monomères contenant des groupes hydroxyle,
(a3) 10 à 89,95 % en poids d'un ou de plusieurs esters alkyliques et/ou cycloalkyliques d'acides carboxyliques éthyléniquement insaturés,
(a4) 0 à 50 % en poids d'un ou de plusieurs composés aromatiques de vinyle et
(a5) 0 à 10 % en poids d'autres monomères éthyléniquement insaturés,
la somme des proportions en poids des monomères (a1) à (a5) étant à chaque fois de 100 % en poids.

10. Composition d'agent de revêtement selon l'une quelconque des revendications 1 à 9, **caractérisée en ce que** les poly(méth)acrylates utilisés en tant que composant (A) présentent un indice OH de 60 à 300 mg KOH/g, de préférence de 70 à 200 mg KOH/g.

11. Composition d'agent de revêtement selon l'une quelconque des revendications 1 à 10, **caractérisée en ce que** les poly(méth)acrylates utilisés en tant que composant (A) présentent une température de transition vitreuse de -100 °C à +100 °C, de préférence de -60 °C à +60 °C.

12. Composition d'agent de revêtement selon l'une quelconque des revendications 1 à 11, **caractérisée en ce que** la composition d'agent de revêtement contient 0,2 à 15,0 % en poids, à chaque fois par rapport à la proportion de liant de la somme des composants (A) plus (B), d'au moins un acide carboxylique aromatique monomère éventuellement substitué (S), dont le groupe carboxyle est conjugué à un système d'électrons π.

13. Procédé de revêtement, **caractérisé en ce qu'**une couche de la composition d'agent de revêtement selon l'une quelconque des revendications 1 à 12 est appliquée sur un substrat éventuellement pré-revêtu.

14. Procédé de revêtement selon la revendication 13, **caractérisé en ce qu'**après l'application, la composition d'agent de revêtement selon l'une quelconque des revendications 1 à 12 est durcie à des températures comprises entre 20 et 80 °C, notamment entre 20 et 60 °C.

15. Procédé de revêtement selon la revendication 13 ou 14, **caractérisé en ce que** le substrat éventuellement pré-revêtu consiste en un aéronef ou une éolienne ou une ou plusieurs parties de ceux-ci, de préférence les pales de rotor d'une éolienne.

16. Procédé de revêtement selon l'une quelconque des revendications 13 à 15, **caractérisé en ce que** la composition d'agent de revêtement selon l'une quelconque des revendications 1 à 12 est appliquée en tant que couche de vernis la plus extérieure sur des pales de rotor d'éoliennes.

17. Utilisation de la composition d'agent de revêtement selon l'une quelconque des revendications 1 à 12 en tant que vernis transparent ou utilisation du procédé selon l'une quelconque des revendications 13 à 16 pour le revêtement de surface hydrophobe et antisalissant permanent.

18. Utilisation de la composition d'agent de revêtement selon l'une quelconque des revendications 1 à 12 pour le revêtement antigivrage d'aéronefs ou d'éoliennes ou de parties de ceux-ci.

19. Utilisation de la composition d'agent de revêtement selon l'une quelconque des revendications 1 à 12 pour le revêtement d'aéronefs ou de pales de rotor d'éoliennes pour réduire le son généré par le mouvement de celles-ci.

20. Éolienne ou une ou plusieurs parties d'une éolienne comprenant un vernissage éventuellement multicouche, **caractérisées en ce que** la couche de vernis supérieure a été fabriquée en une composition d'agent de revêtement selon l'une quelconque des revendications 1 à 12.
